# EUROPEAN PATENT SPECIFICATION

(11) **EP 2 021 185 B1**
(45) Date of publication and mention of the grant of the patent: **02.09.2015**
(21) Application number: 07840219.5
(22) Date of filing: 31.05.2007
(51) Int. Cl.: C09D 5/33, C09D 7/12, C09D 11/322, C08K 3/08, C09D 11/50, B41M 1/22, B41M 3/14

(54) **INK JET PRINTED REFLECTIVE FEATURES AND PROCESSES AND INKS FOR MAKING THEM**
TINTENSTRAHLGEDRUCKTE REFLEKTIERENDE ELEMENTE SOWIE VERFAHREN UND TINTEN ZU IHRER HERSTELLUNG
ÉLÉMENTS RÉFLÉCHISSANTS IMPRIMÉS AU JET D'ENCRE ET PROCÉDÉS ET ENCRES DESTINÉS À LES RÉALISER

(30) Priority: 31.05.2006 US 443303
(43) Date of publication of application: 11.02.2009
(73) Proprietor: SICPA HOLDING SA, 1008 Prilly (CH)
(72) Inventor: HAMPDEN-SMITH, Mark J., Chelmsford, MA 01824 (US); HAUBRICH, Scott T., Albuquerque, NM 87122 (US); BHATIA, Rimple, Los Altos, CA 94024 (US); HARDMAN, Ned Jay, Belmont, CA 94002 (US)
(74) Representative: Hoffmann Eitle
(86) International application number: PCT/US2007/070156
(87) International publication number: WO 2008/024542

(56) References cited:
- EP-A- 1 571 186
- JP-A- 2001 152 070
- US-A1- 2001 003 262
- US-A1- 2005 078 158
- US-A1- 2005 238 804
- ANTSIFEROV V N ET AL: "Stabilization of water suspensions of metal powders", JOURNAL OF ENGINEERING PHYSICS AND THERMOPHYSICS, KLUWER ACADEMIC PUBLISHERS-PLENUM PUBLISHERS, NL, vol. 64, no. 5, 1 May 1993 (1993-05-01), pages 475-478, XP008167250, ISSN: 1573-871X

## Description

### FIELD OF THE INVENTION

The present invention relates to reflective features, their use, and to processes for making reflective features. In particular, the invention relates to thermal and piezo-electric ink jet printed reflective features, e.g., reflective security features or reflective decorative features, that comprise metallic particles, preferably metallic nanoparticles. The invention also relates to inks used to form these reflective features and to processes for making these reflective features.

### BACKGROUND OF THE INVENTION

Recent advances in color copying and printing have put increasing importance on developing new methods to prevent forgery of security documents such as banknotes. While there have been many techniques developed, one area of increasing interest is in developing security features that cannot be readily reproduced, particularly by a color copier or printer.

One approach that has been taken is to formulate an ink for creating a printed image that is visually distinct from its reproduction. For example, U.S. Pat. Nos. 5,059,245, 5,569,535, and 4,434,010, describd the use of stacked thin film platelets or flakes. Images produced with these pigments exhibit angular metamerism. These pigments have been incorporated into security inks used, for example, in paper currency. These pigments have also been incorporated into plastics applications (see, for example, PCT Publication WO 00/24580, published May 4, 2000). Additional inks and security features are described in U.S. Patent Nos. 4,705,356; 4,779,898; 5,278,590; 5,766,738; and 6,114,018.

U.S. Pat. No. 6,013,307, discloses a printing ink that contains a single dye or mixture of at least two dyes that is formulated in order to create the greatest possible metamerism between the formulated ink and a reference ink on the basis of two defined types of illumination. The original image is described as having visually clearly identifiable differences compared to its copy.

Another approach used to produce security documents has been to produce a "covert" image that contains a material which cannot be seen by the naked eye but which can be made visible under specific conditions. For example, U.S. Pat. Nos. 5,324,567, 5,718,754, and 5,853,464 disclose the use of Raman active compounds. U.S. Pat. Nos. 5,944,881 and 5,980,593 describe fluorescent materials that can be used in an ink. Also, U.S. Pat. No. 4,504,084 discloses a document containing an information marking comprised of a first color that is at least partially opaque or visible in infrared light and a second color, which conceals the first color in the visible spectrum, but is invisible to infrared light.

Inks that change upon chemical exposure have also been used for security documents. For example, U.S. Pat. Nos. 5,720,801, 5,498,283, and 5,304,587 disclose ink compositions that are invisible when printed, and develop a color upon exposure to bleach.

EP1571186 discloses metallic inks with different percentages of silver and different dispersants. US 2005/078158 discloses an ink comprising a dispersion of silver nanoparticles in an aqueous solution of carboxymethyl cellulose.

While these efforts afford printed images that are difficult to reproduce, advances in color copiers and color printers continue to be made. Therefore, a need remains to provide a method of producing images, particularly for security documents, which cannot be easily reproduced, and which are visually distinct from their reproductions.

Additionally, the need exists for providing the ability to create reflective features, e.g., reflective security features, that display variable information, e.g., information that is individualized for a specific product unit, such as a serial number, which variable information cannot be easily or readily duplicated or copied. The need also exists for providing the ability to create reflective features displaying variable information and having high resolution at commercially acceptable rates.

### SUMMARY OF THE INVENTION

In one embodiment, the invention is an ink according to claim 1.

In another embodiment, the invention is to a process for forming a reflective feature according to claim 9.

Preferably, the reflective feature has a route mean square surface roughness that is less than about 250 nm, e.g., less than about 100 nm. The metallic particles preferably have an average particle size of less than about 5 µm, less than about 1 µm, less than about 500 nm, or from about 50 nm to about 100 nm. The metallic particles optionally comprise a metal selected from the group consisting of silver, gold, zinc, tin, copper, platinum and palladium or a combination thereof.

The feature preferably comprises a thermal ink jet printed reflective feature or a piezo electric ink jet printed reflective feature, and preferably is durable and/or water resistant.

In a preferred embodiment, at least a portion of the reflective feature displays variable information, which may comprise covert information and/or overt information.

The reflective feature optionally comprises a reflective layer that is at least partially semitransparent. The reflective layer may comprise a non-continuous reflective layer, the non-continuous reflective layer comprising the metallic particles. Optionally, the reflective layer comprises a plurality of microimages, at least one of the microimages optionally comprising variable information. The plurality of microimages preferably have an average largest dimension of less than about 0.5 mm. Optionally, the reflective layer comprises a continuous reflective layer, the continuous reflective layer comprising the metallic particles. The continuous reflective layer may be translucent or opaque. In one embodiment, the continuous reflective layer at least partially overlaps an image on a substrate surface, the image having a longitudinally varying topography, and preferably the continuous reflective layer presents a translation of the longitudinally varying topography of the overlapped image.

In one embodiment, the reflective feature has a resolution, at least in part, greater than about 200 dpi, greater than about 300 dpi or greater than about 400 dpi in the x and y directions.

In other embodiments, the invention is to banknotes, brand authentication tags, articles or manufacture, tax stamps, alcohol bottles and tobacco products comprising one or more of the reflective features of the present invention.

In the process of the invention, the reflective feature preferably is formed at a rate greater than about 15 m/s. Step (b) may occur continuously at a substantially constant temperature. Optionally, step (b) comprises ink jet printing the ink from an ink reservoir, through a print head, and onto a substrate, wherein the temperature of the ink reservoir or print head is greater than about 30°C. In a preferred embodiment, step (b) comprises direct write printing (e.g., piezo-electric, thermal, drop-on-demand or continuous ink jet printing) the ink onto a substrate surface having an image to form the reflective feature. In this embodiment, the image may be viewable through the reflective feature when viewed at a first angle relative to the surface, and at least a portion of the image is at least partially obscured when viewed from a second angle relative to the surface. The image optionally is formed from a printing process selected from the group consisting of direct write printing, intaglio printing, gravure printing, lithographic printing and flexographic printing processes. The image optionally is selected from the group consisting of a hologram, a black and white image, a color image, a watermark, a UV fluorescent image, text and a serial number. In one embodiment, the image has a longitudinally varying topography and the feature comprises a continuous reflective layer that presents a translation of the longitudinally varying topography of the overlapped image.

In one embodiment, the process of the invention further comprises the step of: (c) applying ultraviolet or infrared radiation to the printed ink.

In one embodiment, the reflective feature is printed on a substrate comprising a sheet of transparent material and a reflective layer, the transparent material having a transparent surface, and the reflective feature being printed on the transparent surface. In this embodiment, the reflective feature optionally exhibits an optical interference pattern.

In another embodiment, the invention is to an ink, comprising: (a) metallic particles; and (b) water in an amount greater than about 80 weight percent, based on the total weight of the ink.

In another embodiment, the invention is to an ink suitable for direct write printing, comprising metallic particles, e.g., metallic nanoparticles, and having a VOC content less than about 30 wt. %, e.g., less than about 5 wt.%.

The inks optionally comprises the water in an amount greater than about 90 weight percent, based on the total weight of the ink. The inks preferably are suitable for ink jet printing, e.g., piezo-electric, thermal, drop-on-demand or continuous ink jet printing. Ideally, the inks comprise less than about 20 weight percent volatile organic compounds. The metallic particles in the inks preferably have an average particle size of less than about 5 µm, less than about 1 µm, less than about 500 nm, or from about 50 nm to about 100 nm. The metallic particles in the inks optionally comprise a metal selected from the group consisting of silver, gold, zinc, tin, copper, platinum and palladium or a combination thereof. While in ink form, the metallic particles preferably have an anti-agglomeration agent, e.g., PVP, disposed thereon. The ink may comprise the metallic particles in an amount from about 2 to about 40 weight percent, e.g., from about 5 to about 25 weight percent, based on the total weight of the ink. The inks optionally have a viscosity of less than about 10 cP, e.g., less than about 7.5 cP, or less than about 5 cP. In another embodiment, the invention is to an ink cartridge comprising an ink reservoir, a printing head in communication with the ink reservoir, and any of the above-described inks disposed in the ink reservoir.

### BRIEF DESCRIPTION OF THE DRAWINGS

The present invention will be better understood in view of the non-limiting figures, wherein:
FIGS. 1A-F present several examples of patterns that may be employed to form a semitransparent reflective feature having openings or gaps therein;
FIGS. 2A-C present an example of a security device, which demonstrates the photo-obscuring effect of one aspect of the present invention;
FIG. 3 presents a cross-section of a security feature according to one embodiment of the invention; and
FIGS. 4A-B present a cross-section of a security feature according to another embodiment of the invention.

### DETAILED DESCRIPTION OF THE INVENTION

### I. Introduction

Reflective features, e.g., reflective security features or reflective decorative features, in various applications such as branded products, for example, perfumes, drugs, tobacco, alcohol products and the like, and security documents, for example, passports, bonds, tickets, tax stamps, banknotes, and the like, have become a very important industry. Counterfeiters are becoming more sophisticated, and technology developments such as advanced color copiers are making it easier for these individuals to deprive businesses and consumers of billions of dollars per year.

There are many reflective features, e.g., reflective security features, already in use today. Reflective features in general have been produced from a variety of processes and from many types of inks. Typically, these processes have included screen-printing, off set printing, gravure and intaglio printing using conventional pastes or paste inks. Until the development of recent inventive processes for producing unique materials such as the inventive metallic particles, e.g., metallic nanoparticles, however, the reflective features of the present invention have not been possible.

In one embodiment, the invention is to an ink jet printed, e.g., piezo-electric, thermal, drop-on-demand or continuous ink jet printed, reflective feature, e.g., reflective security feature or reflective decorative feature, comprising metallic particles, preferably metallic nanoparticles.

In another embodiment, the invention is to a process for forming a reflective feature, e.g., reflective security feature or reflective decorative feature, the process comprising the steps of: (a) providing an ink comprising metallic particles, preferably metallic nanoparticles; and (b) direct write printing the ink to form the reflective security feature.

In another embodiment, the invention is to an ink, comprising: (a) metallic particles, preferably metallic nanoparticles; and (b) water in an amount greater than about 80 weight percent, based on the total weight of the ink.

In another embodiment, the invention is to an ink suitable for direct write printing, comprising metallic particles, preferably metallic nanoparticles, and having a VOC content less than about 30 wt. %.

The inks of the present provide for the ability to ink jet print novel reflective features, e.g., reflective security features or reflective decorative features. Additionally, direct-write printing, in particular ink jet printing such as piezo-electric, thermal, drop-on-demand or continuous ink jet printing, provides the ability to form reflective features that cannot be formed by conventional processes. For example, the invention is also directed to security features comprising variable information, e.g., through serialization or individualization. Without direct-write printing this would be tremendously inefficient and expensive, if not impossible. In addition, the inks of the invention work surprisingly well in commercial applications where high-speed printing is required.

As used herein, the term "security feature" means a feature, as defined above, that is placed on an article (e.g., a tag or label, a document such as a passport, check, bond, banknote, currency, ticket, etc.), directly or indirectly, for the purpose of authenticating the article. As used herein, the term "decorative feature" means a feature that is not provided primarily for an authentication purpose, but rather primarily for a graphical or decorative purpose.

### II. Metallic Particles

The invention, in several embodiments, is directed to reflective features, e.g., reflective security features or reflective decorative features, comprising metallic particles, preferably metallic nanoparticles, and to processes for forming such reflective features from inks, preferably digital inks such as piezo-electric, thermal, drop-on-demand or continuous ink jet inks, comprising these metallic particles and/or metallic nanoparticles. As used herein, the term "metallic particles" means particles comprising a metal or metallic characteristic and having an average particle size of less than about 10 µm. Preferably, the metallic particles have an average particle size of less than about 7 µm, preferably less than about 5 µm, more preferably less than about 3 µm, and even more preferably less than about 2 µm. The term "metallic nanoparticles" means particles comprising a metal or metallic characteristic and having an average particle size of less than about 1 µm. One skilled in the art would appreciate that there are many techniques for determining the average particle size of a population of particles, scanning electron microscopy (SEM) being a particularly preferred technique. Other methods for determining the average particle size of micron-sized particles (e.g., from about 1 µm to about 10 µm) is by single particle light obscuration techniques (e.g., with an AccuSizer^{™} particle size analyzer). The average particle size of smaller particles (e.g., smaller than about 1 µm) is also determinable using quasi-elastic light scattering (QELS) techniques (e.g., using a Malvern^{™} ZetaSizer^{™}). By "comprising a metal" it is meant all or a portion of the particles include, in whole or in part, a metal (e.g., an elemental metal (zero oxidation state) or a mixture or alloy of metals) or a metal-containing compound (e.g., a metal oxide or metal nitride). Thus, in a preferred embodiment, the metallic particles and/or metallic nanoparticles comprise a component selected from the group consisting of a metal, a metal alloy, and a metal-containing compound (e.g., a metal oxide). Additionally or alternatively, the metallic particles and/or metallic nanoparticles may comprise a component having a metallic characteristic. The term "metallic characteristic" means a reflective or lustrous optical property similar to a metal. For example, a component may exhibit a metallic characteristic by virtue of it having a small electronic band gap.

As indicated above, the metallic particles and/or metallic nanoparticles of the invention preferably have an average particle size of less than about 1 µm. In another embodiment, the metallic particles and/or metallic nanoparticles have an average particle size of less than about 500 nm, more preferably less than about 250 nm, even more preferably less than about 100 nm, and most preferably less than about 80 nm. The metallic particles and/or metallic nanoparticles optionally have an average particle size greater than about 5 nm, greater than about 10 nm, greater than about 25 nm, greater than about 30 nm, greater than about 40 nm, greater than about 50 nm, greater than about 100 nm, greater than about 250 nm or greater than about 500 nm. In terms of ranges, the metallic particles and/or metallic nanoparticles of the invention optionally have an average particle size in the range of from about 20 nm to about 5 µm, preferably from about 25 nm to about 3µm, more preferably from about 30 nm to about 2 µm, yet more preferably from about 40 nm to about 1 µm, more preferably from about 50 nm to about 500 nm, more preferably from about 50 nm to about 100 nm, and most preferably from about 50 nm to about 80 nm. The metallic particles and/or metallic nanoparticles may have a unimodal or multi-modal (e.g., bimodal, trimodal, etc.) particle size distribution.

In one embodiment, the metallic particles and/or metallic nanoparticles are substantially free of particles having a particle size (meaning largest dimension, e.g., diameter of a spherical particle) greater than 5 µm, e.g., greater than 4 µm, greater than 3 µm, greater than 2 µm, greater than 1 µm, greater than 500 nm, greater than 250 nm, or greater than 100 nm. For purpose of this patent specification and appended claims, "substantially free" means comprising not more than about 50%, preferably not more than about 40%, more preferably not more than about 30%, more preferably not more than about 20%, more preferably not more than about 10%, more preferably not more than about 5%, more preferably not more than about 1%, more preferably not more than about 0.5%, and most preferably not more than about 0.25%, by weight.

Non-limiting examples of metals for use in the metallic particles and/or metallic nanoparticles in the reflective features and inks, e.g., piezo-electric, thermal, drop-on-demand or continuous ink jet inks, of the present invention include transition metals as well as main group metals such as, for example, silver, gold, copper, nickel, cobalt, palladium, platinum, indium, tin, zinc, titanium, chromium, tantalum, tungsten, iron, rhodium, iridium, ruthenium, osmium, lead and mixtures thereof. Non-limiting examples of preferred metals for use in the present invention include silver, gold, zinc, tin, copper, nickel, cobalt, rhodium, palladium and platinum - gold, silver, copper and nickel being particularly preferred. The metallic particles and/or metallic nanoparticles optionally comprise a metal selected from the group consisting of silver, gold, zinc, tin, copper, platinum and palladium or a combination thereof. Non-limiting examples of metal-containing compounds or components that exhibit metallic characteristics and that may be useful as metallic particles and/or metallic nanoparticles of the reflective features and inks, e.g., piezo-electric, thermal, drop-on-demand or continuous ink jet inks, of the present invention include metal oxides, metal nitrides (e.g., titanium nitride or tantalum nitride), metal sulphides and some semiconductors. The metal-containing compound(s) preferably have a small electronic band gaps that gives rise to metallic properties or characteristics. A non-limiting list of exemplary metal oxides includes bronzes such as molybdenum bronze, tungsten bronzes including hydrogen tungsten oxide, sodium tungsten oxide and lithium tungsten oxide as well as other bronzes such as phosphor bronzes. Additional tungsten oxides are described in Published U.S. Patent Application No. 2005/0271566A1, which published December 8, 2005.

In one aspect, the metallic particles and/or metallic nanoparticles comprise a mineral having a metallic characteristic. A non-limiting list of exemplary minerals suitable for the metallic particles and/or metallic nanoparticles includes marcasites and pyrites. In another embodiment, the metallic particles and/or the metallic nanoparticles comprise an enamel or a glass/metal composite that provides a metallic characteristic. In one embodiment, the metallic particles and/or metallic nanoparticles comprise a pearlescent material and/or an opalescent material that provides a metallic characteristic.

The reflective features, e.g., reflective security features or reflective decorative features, of the present invention (as well as the inks such as piezo-electric, thermal, drop-on-demand or continuous ink jet inks used to make, form, print, or create the reflective features of the present invention) also, in one embodiment, comprise mixtures of two or more different metallic particles and/or metallic nanoparticles, optionally with a pigment or a dye. In another embodiment, the reflective features and inks, e.g., piezo-electric, thermal, drop-on-demand or continuous ink jet inks, of the present invention comprise metallic particles and/or metallic nanoparticles that comprise two or more metals in the form of an alloy or a mixture of metals or metal containing compounds. Non-limiting examples of alloys useful as metallic particles and/or metallic nanoparticles of the invention include Cu/Zn, Cu/Sn, Ag/Ni, Ag/Cu, Pt/Cu, Ru/Pt, Ir/Pt and Ag/Co. Optionally, the metallic particles and/or nanoparticles comprise an alloy such as bronze, tungsten bronzes or brass. Also, in an embodiment, the metallic particles and/or metallic nanoparticles have a core-shell structure made of two different metals such as, for example, a core comprising nickel and a shell comprising silver (e.g. a nickel core having a diameter of about 20 nm surrounded by an about 15 nm thick silver shell). In another embodiment, the core-shell structure may be comprised of a metal oxide core with another metal oxide coating. A non-limiting example is a nanoparticle core-shell structure comprising a mica core and a titania coating. In another embodiment, the metallic particles and/or metallic nanoparticles comprise metal-effect particles and/or pigments. One method for creating metal effect pigments is to deposit thin layers of one metal oxide or ceramic on the surface of another (e.g. TiO₂ on mica). Metal-effect pigments are further described in CENEAR Vol. 81, No. 44, pp. 25-27 (November 3, 2003) (ISSN 0009-2347), the entirety of which is incorporated herein by reference.

In another embodiment, the metallic particles and/or metallic nanoparticles comprise composite particles having a first phase, which is metallic, and a second phase, which is non-metallic. In this embodiment, the second phase preferably does not substantially detract from the reflectivity or luster of the metallic first phase. Non-limiting examples for the second phase include silicates, borates, and silica. The structure of the composite particles may be such that the second phase is mixed with the first phase to form the metallic particles and/or metallic nanoparticles, the first phase is a coating over the second phase, or the second phase is a coating over the first phase. In another embodiment, the metallic particles and/or metallic nanoparticles comprise composite particles comprising a first metal phase (comprising an elemental metal or a mixture or alloy of metals) and a second phase comprising a metal-containing compound (e.g., a metal oxide such as titania or alumina). In another embodiment, the metallic particles and/or metallic nanoparticles comprise composite particles comprising a first metal phase (comprising an elemental metal or a mixture or alloy of metals) and a second phase comprising a pigment or dye. The pigment or dye preferably does not substantially detract from the reflectivity or luster of the first phase. In this aspect, the pigment or dye may change the color of the metallic particles and/or metallic nanoparticles from the native metallic color of the first phase to another color (e.g. gold). Non-limiting examples for dyes or pigments suitable for the second phase include one or more of yellow, green, blue, red, and/or orange dyes or pigments. The metallic color achieved in the composite (or non-composite) metallic particles and/or the metallic nanoparticles optionally is selected from the group consisting of silver, copper, bronze, gold, and black, as well as a metallic reflectivity or luster of any color of the visible spectrum.

Metallic particles and/or metallic nanoparticles suitable for use in the reflective features, preferably the reflective security features or reflective decorative features, of the present invention and in the inks, e.g., piezo-electric, thermal, drop-on-demand or continuous ink jet inks, preferably digital inks, used to form these reflective features can be produced by a number of methods. For example, the metallic particles and/or metallic nanoparticles may be formed by spray pyrolysis, as described, for example, in U.S. Provisional Patent Application No. 60/645,985, filed January 21, 2005, flame spray pyrolysis, as described, for example, in U.S. Patent Application Serial No. 11/335,729, filed April 5, 2006, or in an organic matrix, as described in U.S. Patent Application Serial No. 11/117,701, filed April 29, 2005, the entireties of which are fully incorporated herein by reference. A non-limiting example of one preferred method of making metallic particles and metallic nanoparticles, is known as the polyol process, and is disclosed in U.S. Patent No. 4,539,041, which is fully incorporated herein by reference. A modification of the polyol process is described in, e.g., P.-Y. Silvert et al., "Preparation of colloidal silver dispersions by the polyol process" Part 1 - Synthesis and characterization, J. Mater. Chem., 1996, 6(4), 573-577; Part 2 - Mechanism of particle formation, J. Mater. Chem., 1997, 7(2), 293-299, both disclosures of these documents are fully incorporated by reference herein. Briefly, in the polyol process a metal compound is dissolved in, and reduced or partially reduced by a polyol such as, e.g., a glycol, at elevated temperature to afford corresponding metal particles. In the modified polyol process, the reduction is carried out in the presence of a dissolved anti-agglomeration substance, preferably a polymer, most preferably polyvinylpyrrolidone (PVP).

A particularly preferred modification of the polyol process for producing metallic particles, especially metallic nanoparticles, is described in U.S. Provisional Patent Applications Serial Nos. 60/643,577 filed January 14, 2005, 60/643,629 filed January 14, 2005, and 60/643,578 filed January 14, 2005, the entireties of which are incorporated herein by reference, and in co-pending Non-Provisional U.S. Patent Applications Serial Nos. 11/331,211 filed January 13, 2006, 11/331,238 filed January 13, 2006, and 11/331,230 filed January 13, 2006, which are also fully incorporated by reference herein. In a preferred aspect of a modified polyol process, a dissolved metal compound (e.g., a silver compound such as silver nitrate) is combined with and reduced by a polyol (e.g., ethylene glycol, propylene glycol and the like) at an elevated temperature (e.g., at about 120°C) and in the presence of a polymer, preferably a heteroatom-containing polymer such as PVP.

The metallic particles and/or metallic nanoparticles in the reflective features, preferably the reflective security features or reflective decorative feautres, or in the inks, e.g., piezo-electric, thermal, drop-on-demand or continuous ink jet inks, preferably digital inks, used to form these features optionally include an anti-agglomeration substance that inhibits agglomeration of the metallic particles and/or metallic nanoparticles when dispersed in the inks. The anti-agglomeration substance may be inorganic or organic and may comprise a low molecular weight compound, preferably a low molecular weight organic compound, e.g., a compound having a molecular weight of not higher than about 500 amu, more preferably not higher than about 300 amu, and/or may comprise an oligomeric or polymeric compound, preferably organic polymeric compound, having a (weight average) molecular weight of at least about 1,000 amu, for example, at least about 3,000 amu, at least about 5,000 amu, or at least about 8,000 amu, but preferably not higher than about 500,000 amu, e.g., not higher than about 200,000 amu, or not higher than about 100,000 amu. By way of non-limiting example, the anti-agglomeration substance, preferably a polymer, and more preferably a polyvinylpyrrolidone, optionally has a weight average molecular weight in the range of from about 3,000 amu to about 60,000 amu. For example, the anti-agglomeration substance optionally has a weight average molecular weight of about 10,000 amu, about 20,000 amu, about 30,000 amu, about 40,000 amu or about 50,000 amu. Particularly preferred polymers for use as an anti-agglomeration substance in the present invention include polymers which comprise monomer units of one or more unsubstituted or substituted N-vinyllactams, preferably those having from about 4 to about 8 ring members such as, e.g., N-vinylcaprolactam, N-vinyl-2-piperidone and N-vinylpyrrolidone. These polymers include homo- and copolymers, and combinations thereof. Other non-limiting examples of polymers which are suitable for use as anti-agglomeration substance in the present invention are disclosed in, e.g., U.S. Patent Application Publication 2004/0182533 A1, which published September 23, 2004, the entire disclosure of which is expressly incorporated by reference herein. In a preferred embodiment, the metallic particles and/or the metallic nanoparticles comprise a metal or metal-containing compound, or a compound having a metallic characteristic, and an anti-agglomeration agent, preferably a polymer, and most preferably a heteroatom-containing polymer.

According to a preferred aspect of the present invention, the metallic particles and/or metallic nanoparticles useful in the inks, e.g., piezo-electric, thermal, drop-on-demand or continuous ink jet inks, and reflective features of the present invention exhibit a small average particle size, preferably with a narrow particle size distribution. A narrow particle size distribution may be used in direct-write applications or digital printing because it may limit clogging of the orifice of a direct-write device, e.g., an ink jet head or cartridge, by large particles. Narrow particle size distributions also may provide the ability to form features having a high resolution and/or high packing density.

The metallic particles and/or metallic nanoparticles for use in the reflective features and inks, e.g., piezo-electric, thermal, drop-on-demand or continuous ink jet inks, preferably digital inks, of the present invention optionally also show a high degree of uniformity in shape. The metallic particles and/or metallic nanoparticles for use in the reflective features and inks, e.g., piezo-electric, thermal, drop-on-demand or continuous ink jet inks, preferably digital inks, of the present invention optionally are substantially one shape, e.g., optionally substantially spherical in shape. Substantially spherical metallic particles and/or metallic nanoparticles may be able to disperse more readily in a liquid suspension and impart advantageous flow characteristics, particularly for deposition in an ink, e.g., a digital ink, a piezo-electric, thermal, drop-on-demand or continuous ink jet ink, for use with an ink-jet device, direct write tool or other similar device or tool. For a given level of solids loading, a low viscosity metallic composition having substantially spherical metallic particles and/or metallic nanoparticles may have a lower viscosity than a composition having non-spherical metallic particles, such as metallic flakes. Substantially spherical metallic particles and/or metallic nanoparticles may also be less abrasive than jagged or plate-like particles, thus, likely reducing the amount of abrasion and wear on the deposition tool.

In one embodiment, at least about 70 wt. %, at least about 80 wt. %, at least about 85 wt. %, at least about 90 wt. %, at least about 95 wt. %, or at least about 99 wt. % of the metallic particles and/or metallic nanoparticles useful in the present invention, e.g., in the reflective features, preferably the reflective security features or reflective decorative features, and/or in the inks, e.g., piezo-electric, thermal, drop-on-demand or continuous ink jet inks, preferably the digital inks used to form the reflective features, are substantially spherical in shape. In another embodiment, the metallic particles and/or metallic nanoparticles, are in the range of from about 70 wt. % to about 100 wt. % substantially spherical in shape, e.g., from about 80 wt. % to about 100 wt. % substantially spherical in shape or from about 90 wt. % to about 100 wt. % substantially spherical in shape. In another embodiment, the reflective features and/or the inks, e.g., piezo-electric, thermal, drop-on-demand or continuous ink jet inks, used to form the reflective features are substantially free of metallic particles in the form of flakes. Conversely, in other aspects, the reflective features and/or the inks used to form the reflective features comprise metallic particles and/or metallic nanoparticles in the form of flakes, rods, tubes, tetrapods, platelets, needles, discs and/or crystals, optionally in the same weight percents described above with respect to spherical particles.

### III. Ink Formulations Used to Form Reflective Features

The ink or inks used to form the reflective features, e.g., the reflective security features or reflective decorative features, of the present invention may comprise a variety of different components. Ideally, the ink comprises metallic particles, preferably metallic nanoparticles, as fully described above. Additionally, the ink preferably comprises a vehicle capable of dispersing the metallic particles and/or metallic nanoparticles. Optionally, the ink may also include one or more additives.

The metallic particles and/or metallic nanoparticles, described above, are useful in inks, e.g., piezo-electric, thermal, drop-on-demand or continuous ink jet inks or digital inks, suitable for printing, preferably ink-jet printing or direct write printing or digitally printing the reflective features, e.g., the reflective security features or the reflective decorative features, of the present invention. Although highly dependant on material and the specific printing process being implemented, in various embodiments, the metallic particle and/or metallic nanoparticle loading in the inks, e.g., piezo-electric, thermal, drop-on-demand or continuous ink jet inks or digital inks, is at least about 2 % by weight, e.g., at least about 5 % by weight, at least about 10 % by weight, at least about 15 % by weight, at least about 20 % by weight, or at least about 50 % by weight, based on the total weight of the total ink composition. It is preferred for the total loading of metallic particles and/or metallic nanoparticles useful in the inks used to form the reflective features of the present invention to be not higher than about 75 % by weight, e.g., not higher than about 40 % by weight, not higher than about 20 % by weight, not higher than about 10 % by weight, or not higher than about 5 % by weight, based on the total weight of the ink composition. In various embodiments, in terms of ranges, the ink comprises from about 1 wt % to about 60 wt. % metallic particles and/or metallic nanoparticles, e.g., from about 2 to about 40 wt. % metallic particles and/or metallic nanoparticles, from about 5 to about 25 wt. % metallic particles and/or metallic nanoparticles, or from about 10 to about 20 wt. % metallic particles and/or metallic nanoparticles, based on the total weight of the ink composition. In various other embodiments, the ink comprises from about 40 wt % to about 75 wt. % metallic particles and/or metallic nanoparticles, e.g., from about 40 to about 60 wt. % metallic particles, based on the total weight of the ink composition. Loadings in excess of the preferred loadings can lead to undesirably high viscosities and/or undesirable flow characteristics. Of course, the maximum loading that still affords useful results also depends on the density of the metallic particles and/or metallic nanoparticles. In other words, for example, the higher the density of the metal of the metallic particles and/or metallic nanoparticles, the higher will be the acceptable and desirable loading in weight percent.

For thermal ink jet printing applications, described in more detail below, the ink optionally comprises less than about 50 wt. % metallic particles and/or metallic nanoparticles, e.g., less than about 25 wt. %, less than 20 wt. %, or less than about 15 wt. % metallic particles and/or metallic nanoparticles. In terms of ranges, inks suitable for thermal ink jet printing applications optionally comprise from about 1 to about 50 wt. % metallic particles and/or metallic nanoparticles, e.g., from about 2 to about 40 wt. % metallic particles and/or metallic nanoparticles, from about 5 to about 25 wt. % metallic particles and/or metallic nanoparticles, or from about 10 to about 20 wt. % metallic particles and/or metallic nanoparticles, based on the total weight of the ink composition.

### IV. Vehicles

The reflective features, e.g., the reflective security features or reflective decorative features, of the present invention preferably are formed, printed, or created from inks comprising a vehicle in addition to the metallic particles and/or metallic nanoparticles. In one embodiment, these inks further comprise an anti-agglomeration substance, for example, a polymer or surfactant, as described above. The vehicle for use in the inks, e.g., piezo-electric, thermal, drop-on-demand or continuous ink jet inks or digital inks, is preferably a liquid that is capable of stably dispersing the metallic particles and/or metallic nanoparticles more preferably the metallic particles and/or metallic nanoparticles comprising an anti-agglomeration substance. For example, vehicles are preferred that are capable of affording an ink dispersion that can be kept at room temperature for several days or even one, two, three weeks or months or even longer without substantial agglomeration and/or settling of the metallic particles and/or metallic nanoparticles. To this end, it is also preferred for the vehicle to be compatible with the surface of the metallic particles and/or metallic nanoparticles. It is particularly preferred for the vehicle to be capable of dissolving the anti-agglomeration substance, if present, to at least some extent, without removing it from the metallic particles and/or metallic nanoparticles. In one embodiment, the vehicle comprises (or predominantly consists of) one or more polar components (solvents) such as, e.g., a protic solvent, or one or more aprotic, non-polar components, or a mixture thereof. The vehicle, in an embodiment, is a solvent selected from the group consisting of alcohols, polyols, amines, amides, esters, acids, ketones, ethers, water, saturated hydrocarbons, unsaturated hydrocarbons, and mixtures thereof.

Where the reflective features of the invention, whether reflective or conductive or a combination thereof, are printed, formed or created through direct-write printing, such as ink-jet printing e.g., piezo-electric, thermal, drop-on-demand or continuous ink jet printing, or digital printing, the vehicle is preferably selected to effectively work with direct-write printing tool(s), such as, e.g., an ink-jet head, a digital head, and cartridges, particularly in terms of viscosity and surface tension of the ink composition.

### Vehicles Suitable for Piezo-Electric Ink Jet Printing

As discussed in more detail below, it is desirable to also take into account the requirements, if any, imposed by the deposition tool (e.g., in terms of viscosity and surface tension of the ink). In a preferred aspect, for piezo-electric ink jet inks, the vehicle comprises a mixture of at least two solvents, optionally at least two organic solvents, e.g., a mixture of at least three organic solvents, or at least four organic solvents. The use of more than one solvent is preferred because it allows, *inter alia*, to adjust various properties of a composition simultaneously (e.g., viscosity, surface tension, contact angle with intended substrate etc.) and to bring all of these properties as close to the optimum values as possible. In one embodiment, the vehicle comprises a mixture of ethylene glycol, ethanol and glycerol. Non-limiting examples of vehicles are disclosed in, e.g., U.S. Patent Nos. 4,877,451; 5,679,724; 5,725,647; 5,837,041; 5,837,045 and 5,853,470, the entire disclosures of which are incorporated by reference herein. In another embodiment, the vehicle comprises water, optionally primarily water.

Inks used to form the reflective features of the present invention in piezo-electric ink-jet printing processes preferably have a viscosity (measured at 20°C) that is not lower than about 2 centipoise (cP), e.g., not lower than about 10 cP, not lower than about 12 cP, or not lower than about 15 cP, and not higher than about 50 cP, e.g., not higher than about 40 cP, not higher than about 30 cP, or not higher than about 25 cP. Preferably, the viscosity of the ink compositions show only small temperature dependence in the range of from about 20°C to about 40°C, e.g., a temperature dependence of not more than about 0.4 cP/°C. For use in a piezo ink-jet printing process, the viscosity of the inks preferably is in the range of from about 2 cP to about 40 cP, preferably from about 10 cP to about 35 cP, and most preferably from about 10 cP to about 30 cP, preferably less than about 25 cP. Piezo-electric ink jet inks also preferably have surface tensions in the range of from about 20 dynes/cm to about 60 dynes/cm.

### Vehicles Suitable for Thermal Ink Jet Printing

In one preferred embodiment, described in more detail below, the metallic particle-containing ink, e.g., metallic nanoparticle-containing ink, is suitable for thermal ink jet printing. In a preferred aspect, for thermal ink jet inks, the vehicle comprises a mixture of at least two solvents, optionally at least two organic solvents, e.g., a mixture of at least three organic solvents, or at least four organic solvents, although water preferably is the primary solvent. The use of more than one solvent is preferred because it allows, *inter alia*, to adjust various properties of a composition simultaneously (e.g., viscosity, surface tension, contact angle with intended substrate etc.) and to bring all of these properties as close to the optimum values as possible. In one embodiment, the vehicle comprises a mixture of propylene glycol and water. Thermal ink jet inks (like piezo-electric ink jet inks) preferably have surface tensions in the range of from about 20 dynes/cm to about 60 dynes/cm. Further, the preferred inks used to form the reflective features of the present invention exhibit preferred surface tensions (measured at 20°C) of not lower than about 20 dynes/cm, e.g., not lower than about 25 dynes/cm, or not lower than about 30 dynes/cm, and not higher than about 40 dynes/cm.

An ink that is suitable for thermal ink jet printing according to one embodiment of the invention preferably has a viscosity (measured at 20°C) less than about 60 cP, e.g., less than about 30cP or less than about 20cP. More preferably, the ink has a viscosity that is greater than about 0.5 cP, e.g., greater than about 1.0 cP, or greater than about 1.3 cP, and less than about 10 cP, e.g., less than about 7.5 cP, less than about 5 cP, or less than about 4 cP.

Inks of the invention that are suitable for thermal ink jet printing applications preferably comprise less than about 50 weight percent, e.g., less than about 30 weight percent, less than about 20 weight percent, less than about 10 weight percent, or less than about 5 weight percent, volatile organic compounds, e.g., as a portion of the vehicle, based on the total weight of the ink. As used herein, the term "volatile organic compounds" (VOC's) means any compound of carbon, excluding carbon monoxide, carbon dioxide, carbonic acid, metallic carbides or carbonates, and ammonium carbonate, which participate in atmospheric photochemical reactions. Examples of VOC's are provided in 40 CFR Part 51.100(s) (2005), the entirety of which is incorporated herein by reference. Low VOC formulations for both thermal and piezo-electric ink jet inks are highly desired in manufacturing and printing plants in order to meet environmental regulations. Thus, in one aspect, the invention is to an ink suitable for direct write printing, e.g., piezo-electric, thermal, drop-on-demand or continuous ink jet printing, comprising metallic nanoparticles and having a VOC content less than about 30 wt. %, e.g., less than about 20 wt.%, less than about 10 wt.% or less than about 5 wt.%.

For thermal ink jet printing applications, the vehicle in the ink preferably comprises water. In various embodiments, the ink optionally comprises water in an amount greater than about 40 weight percent, e.g., greater than about 60 weight percent, greater than about 70 weight percent, greater than about 80 weight percent, or greater than about 90 weight percent, based on the total weight of the ink. In terms of upper range limits, optionally in combination with the previously disclosed lower range limits, the ink optionally comprises water in an amount less than about 90 weight percent, e.g., less than about 70 weight percent, less than about 60 weight percent, or less than about 50 weight percent, based on the total weight of the ink. Optionally, the vehicle comprises water and one or more additional solvents, such as any of those described above. Water preferably is used as the primary vehicle because most bubble jet printers have been designed around the boiling point of water. Ethylene glycol and propylene glycol may be used as viscosity and surface tension modifiers and/or humectants in combination with water as the primary vehicle.

### V. Optional Additives

The inks, e.g., piezo-electric, thermal, drop-on-demand or continuous ink jet inks or digital inks, comprising the metallic particles and/or metallic nanoparticles, used to form the reflective features of the present invention, preferably the reflective and/or conductive reflective features, in an embodiment can further comprise one or more additives, such as, but not limited to, adhesion promoters, rheology modifiers, surfactants, wetting angle modifiers, humectants, crystallization inhibitors, binders, dyes/pigments and the like.

In one embodiment, the ink, e.g., piezo-electric, thermal, drop-on-demand or continuous ink jet ink or digital ink, comprises an adhesion promoter, which facilitates adhesion of the metallic particles, preferably the metallic nanoparticles, in the ink to the substrate on which it is ultimately deposited. Non-limiting examples of adhesion promoters include shellac, latex, acrylates, other polymers, metal or a main group oxide (e.g., SiO₂, CuO). Additional examples of adhesion promoters are described in U.S. Pat. No. 5,750,194, which is herein fully incorporated by reference. The anti-agglomeration substance that optionally is included with the metallic particles and/or metallic nanoparticles may also act as an adhesion promoter. Additionally, although less preferred, the adhesion promoter or any of the above additives can be added directly to the substrate.

In one embodiment, the ink, e.g., piezo-electric, thermal, drop-on-demand or continuous ink jet ink or digital ink, in addition to the metallic particles and/or metallic nanoparticles, further comprises a rheology modifier, which reduces spreading of the ink after deposition. Non-limiting examples of rheology modifiers include SOLTHIX 250 (Lubrizol), SOLSPERSE 21000 (Lubrizol), styrene allyl alcohol (SAA), ethyl cellulose, carboxy methylcellulose, nitrocellulose, polyalkylene carbonates, ethyl nitrocellulose, and the like.

In one embodiment, the ink, e.g., piezo-electric, thermal, drop-on-demand or continuous ink jet ink or digital ink, in addition to the metallic particles and/or metallic nanoparticles, further comprises a binder, which increases the water resistance and durability of the ultimately formed reflective features. Non-limiting examples of binders include latex, shellac, acrylates, and the like. Furthermore, polymers such as, but not limited to, e.g., polyamic acid polymers, acrylic polymers, PVP, co-polymers of PVP (alkanes, styrenes, etc.), polyfluorosilicate polymers, polyflourinated telomers (including Zonyl^{™} products manufactured by E.I. DuPont de Nemours & Co.), and co-polymers of styrene acrylics (e.g., those sold under the Joncryl^{™} trade name available from Johnson Polymer Corp.) can improve the adhesion of the metallic particles and/or metallic nanoparticles to a polymer substrate, as can substances such as coupling agents (e.g., zinc oxides, titanates and silanes). These substances can function to increase adhesion of the feature to the substrate, as well as to decrease the interaction of water with the feature thereby rendering the feature more durable. Cohesion promoters may also be included in the ink to improve reflective feature durability.

The main technical challenge in forming a water resistant, durable, reflective feature through ink jet printing is to have a binder component in the formulation that is: (1) soluble in the ink vehicle; (2) compatible with the metallic nanoparticles; and (3) when printed, insoluble in water. This is particularly challenging when the ink vehicle is aqueous based. In this regard, polyacrylates and polystyrene acrylates (Joncryls^{™}) are useful. The use of binders in aqueous inks to produce scratch and rub resistant identifing marks on substrates is disclosed in U.S. Pat. No. 5,889,083, the entirety of which is incorporated herein by reference. Waxes are also used to help with rub resistance, such as, polyethylene or tetrafluoroethylene wax.

### VI. Thermal Ink Jet Printing Formulations

As indicated above, in one embodiment, the reflective features are formed, in whole or in part, in a thermal ink jet printing process. Thermal ink jet inks are typically water-based, meaning the vehicle comprises primarily water. Numerous problems exist with current metallic particle-containing inks, e.g., metallic nanoparticle-containing inks, that would render them unsuitable for thermal ink jet printing applications. For example, metallic particles and, in particular, metallic nanoparticles in inks have a depressed melting points as compared to their corresponding bulk metals. Thermal ink jetting employs a resistor to heat (and rapidly boil) the ink vehicle. If unprotected, the metallic nanoparticles in the ink could sinter together during this heating and thereby form agglomerations of nanoparticles. Over time, the agglomeration of particles, e.g., nanoparticles, would be expected to clog the discharge orifice of the print head. In addition, the particles may sinter directly to the thermal resistors (coating the resistor) thus causing coagation. Also, metallic nanoparticles can spot sinter at the pressures and temperatures associated with thermal ink jetting processes thereby undesirably causing agglomeration and subsequent nozzle clogging. Accordingly, to date, no metallic particle or metallic nanoparticle-containing inks have been suitable for thermal ink jet printing applications.

Surprisingly and unexpectedly, ink formulations comprising metallic particles and/or metallic nanoparticles have been discovered that are suitable for thermal ink jet printing applications notwithstanding the above-described expected limitations. Thus, in one aspect, the invention is to an ink, preferably suitable for ink jet printing, more preferably suitable for thermal ink jet printing, comprising: metallic particles; and water in an amount greater than about 50 weight percent, e.g., greater than about 70 weight percent or greater than about 80 weight percent, based on the total weight of the ink. This ink formulation may include the metal particles and/or metallic nanoparticles in the various amounts and types disclosed above, although inks suitable for thermal ink jet printing applications preferably comprise less than about 10 weight percent pigment particles. The ink formulation may also include one or more of the additives disclosed above, as well as any of the vehicles, described above, in addition to water. The metallic nanoparticles preferably have an anti-agglomeration agent, e.g., PVP, disposed thereon. Without being bound by any theory, it is believed that the anti-agglomeration agent protects the metallic particles and/or metallic nanoparticles from sintering during the thermal ink jet printing process.

In another embodiment, the invention is to an ink cartridge comprising an ink reservoir, a printing head in communication with the ink reservoir, and the above-described thermal ink jet ink disposed in the ink reservoir. Since metallic particles are generally dense (e.g., on the order of about 7 g/mL to about 22 g/mL) and thermal ink jet inks have a very low viscosity (e.g., in the range of about 1 to about 5 cP), it would be expected that the metallic particles and/or metallic nanoparticles would settle out of the ink relatively quickly. Surprisingly and unexpectedly, however, a cartridge employing an ink of this aspect of the invention may be used in a printing application, e.g., a thermal ink jet printing application, and then remain unused for an extended period of time, e.g., 3 months, 6 months, or longer, without deleterious effects on subsequent printing applications using the cartridge.

### VII. Substrates

The above-described inks, e.g., piezo-electric, thermal, drop-on-demand or continuous ink jet inks or digital inks, are printed, deposited, or otherwise placed on any of a variety of substrates having myriad surface characteristics, thereby forming, placing, or printing the reflective features of the present invention, preferably the reflective and/or conductive reflective features, on the substrate surface.

In a preferred embodiment, the reflective feature, preferably the reflective security feature or reflective decorative feature, of the invention is printed using an ink composition or formulation comprising one or more metallic particles, preferably metallic nanoparticles, onto a substrate having a surface upon which the reflective feature is formed. In this embodiment, the printing is preferably performed by a direct write tool, e.g., an ink jet printer (piezo-electric, thermal, drop-on-demand or continuous printer), print head, cartridge or the like, and the ink composition or formulation is jettable through an ink jet head or cartridge. In a most preferred embodiment, the reflective feature, preferably the reflective security feature or reflective decorative feature, is formed from an ink formulation at a low temperature. Thus, the selection of substrates upon which the reflective feature of the invention is formed include those substrates having a low softening or melting point such as paper, polymers, etc. According to a preferred aspect of the present invention, the substrate onto which the metallic particle- and nanoparticle-containing ink composition or formulation is deposited has a softening and/or decomposition temperature of not higher than about 300°C, e.g., not higher than about 250°C, not higher than about 225°C, not higher than about 200°C, not higher than about 185°C, not higher than about 150°C, or not higher than about 125°C. For reflective applications, room temperature in many cases is adequate.

Non-limiting examples of substrates that are particularly advantageous for printing on or incorporating into the security feature, preferably the reflective security feature or reflective decorative feature, include substrates or substrate surfaces comprising one or more of the following: a fluorinated polymer, polyimide, epoxy resin (including glass-filled epoxy resin), polycarbonate, polyester, polyethylene, polypropylene, bi-oriented polypropylene, mono-oriented polypropylene, polyvinyl chloride, ABS copolymer, wood, paper, metallic foil, glass, banknotes, linen, labels (e.g., self adhesive labels, etc.), synthetic paper, flexible fiberboard, non-woven polymeric fabric, cloth and other textiles. Other particularly advantageous substrates include cellulose-based materials such as wood, paper, cardboard, linen, or rayon, and metallic foil and glass (e.g., thin glass). Although the compositions of the present invention are particularly advantageously useful for temperature-sensitive substrates, it is to be appreciated that other substrates such as, e.g., metallic and ceramic substrates, are useful as well.

In one embodiment, the substrate comprises a coating. In particular, the substrates discussed above, for example, a natural or synthetic paper, have been coated with specific layers to enhance gloss and/or accelerate the infiltration of ink or ink vehicle used in the inks, particularly the digital inks. Preferred examples of coatings, preferably glossy coatings for ink-jet substrates such as paper (e.g., photo paper), comprise silica, alumina, silica alumina and/or fumed alumina. In a preferred embodiment, the surface of a paper has a pH less than 5.

In one embodiment, the substrate comprises a coating (or pre-coat), which seals the porosity of the substrate. Making porous substrates non-porous by adding a coating will inhibit small metallic nanoparticles from bleeding into the substrate. The pre-coat will also help planerize a porous or rough substrate, thus allowing for the printing of a smooth metallic film, which is important to form highly reflective feature.

In various embodiments, the substrate includes one or more images on its surface. The images may be formed from a printing process selected from the group consisting of direct write printing (e.g., ink jet or digital printing), intaglio printing, gravure printing, offset printing, lithographic printing and flexographic printing processes. For holograms or some other types of images, the image may be formed, at least in part, through a laser etching process. The ability to print, create and form the reflective features of the invention on a substrate having an image (e.g., printed image, hologram, or the like) provides an additional level of document security not heretofore available. In addition, being able to individualize a document, a tag, etc., with variable information provides even further anti-counterfeiting measures not recognized or available until now. As used herein, the term "variable information" means information that is individualized for a product unit or document, such as, but not limited to, serialized data. For example, a serial number is one non-limiting type of variable information. Other types of variable information include: counters, lettering, sequential symbols, alphanumeric variable information, non-serialized variable information (variable information that is not sequential), and combinations thereof.

Additionally, the image on the surface of a substrate may or may not have a longitudinally varying topography. By longitudinally varying topography it is meant that the image has portions, e.g., surfaces, which extend, preferably in varying degrees, in a direction perpendicular to the substrate surface. The longitudinally extending surfaces may be formed, for example, as regions in which more ink was applied to the substrate surface to form the image. That is, some portions of the image, e.g., regions of one color, may have a greater longitudinally extending topography than other portions of the image, e.g., regions of a different color. The ability to print on non-uniform surfaces, and in vias, trenches and cavities also provides additional anti-counterfeiting measures not available with conventional inks or processes.

### VIII. Ink Deposition

As indicated above, the reflective features, for example, the reflective security features or reflective decorative features, of the present invention, preferably are formed through a direct-write printing process, preferably piezo-electric, thermal, drop-on-demand or continuous ink jet printing. In a "direct-write" printing process, the deposition tool, e.g., in jet printing head, is preferably controllable over an x-y grid, or an x-y-z grid. A preferred direct-write deposition tool according to the present invention is an ink-jet device or printer, e.g., piezo-electric, thermal, drop-on-demand or continuous ink jet device or printer.

As mentioned previously, the ability to print a reflective feature comprising variable information at commercially acceptable rates has not heretofore been possible. Direct write printing processes, such as ink jet printing processes, are particularly preferred according to the present invention in that they provide the ability to form reflective features, preferably reflective security features or reflective decorative features, comprising variable information as well as the ability to form, print, create such reflective features at a commercially acceptable rate. The ability to incorporate, for example, a unique serial number, feature or the like to a reflective feature is a desirable anti-counterfeiting measure. The inks comprising the metallic particles and/or metallic nanoparticles provide for digital printing that allows for the printing of variable information in the reflective features of the invention, especially the reflective security features or reflective decorative features, of the invention.

An ink suitable for a commercial direct write printing process should have numerous characteristics and properties including a precise loading of particles, a correct viscosity, and appropriate binders, adhesion promoters, etc. It was surprisingly discovered that the inks of the present invention are capable of being used in commercial printing equipment to print the reflective features of the invention at rapid, commercially acceptable, rates. The reflective features, preferably the reflective security features or reflective decorative features, of the present invention in one embodiment, are printed using a direct write printing process on a moving substrate, e.g., an ink jet or digital printing process, at a rate greater than about 0.1 m/s, e.g., greater than about 0.5 m/s, greater than about 1 m/s, greater than about 5 m/s, optionally in the range of about 100-600 ft/min (30.5-183 m/s) based on the rate of movement of the substrate. Preferably, the reflective features printed at these speeds have a very high resolution (preferably greater than about 200 dpi (79 dpcm), greater than about 300 dpi (118 dpcm), greater than about 400 dpi (157 dpcm) or greater than about 600 dpi (236 dpcm) in the x and/or y directions). As used in this context, the terms "digital printing," "digitally printed" and variations thereof refer to a non-contact printing processes utilizing digital data, preferably capable of printing variable information. In one embodiment, the rate at which the reflective features are formed refers to the speed at which the substrate passes through the ink jet printer as the reflective feature is printed thereon, or the equivalent rate if the substrate remains stationary as the printing head(s) move over the substrate surface. For these and other reasons, direct write printing processes, devices and tools, such as ink-jet processes, devices and tools, are highly desirable means for depositing the above-described inks onto a substrate surface. In another embodiment, the reflective features, preferably reflective security features or reflective decorative features, are capable of being printed using the inks of this invention at a rate greater than about 5,000 reflective features per minute, preferably greater than about 10,000 reflective features per minute, and most preferably greater than about 20,000 reflective features per minute. Of course, the rate at which reflective features are printed will depend, in part, on the size of the reflective features. Furthermore, in this embodiment, the reflective features preferably comprise reflective security features, preferably comprising variable information.

In one aspect, the process for forming a reflective feature, e.g., reflective security feature or reflective decorative feature, of the present invention comprises the steps of: (a) providing an ink comprising metallic particles and/or metallic nanoparticles; and (b) direct write printing (e.g., piezo-electric, thermal, drop-on-demand or continuous ink jet printing) the ink on a substrate to form the reflective feature. As discussed above, at least a portion of the reflective feature optionally displays variable information, e.g., covert and/or overt variable information. The substrate in this embodiment can be any of those previously described herein. Preferably, the substrate comprises paper, plastic, linen or a combination thereof. In addition, in this embodiment, it is further contemplated that the surface of the substrate optionally contains one or more images upon which the reflective feature of the invention is printed, in whole or in part. The one or more images in an embodiment may comprise a printed image, a hologram or the like.

One problem encountered by some conventional piezo-electric ink jet printing processes is that the temperature of the printing head(s) and/or cartridges tends to vary during continuous high speed printing, thereby undesirably changing one or more properties, e.g., viscosity and/or surface tension, of an ink that is designed to be printed at ambient temperature. This change in properties of the ink may have deleterious effects such as changing print quality and performance, tail formation as viscosity drops, and clogging and failure of the print head as viscosity rises.

In one aspect of the invention (particularly for piezo-electric ink jet printing applications), the ink composition or formulation of the metallic particle and/or metallic nanoparticle-containing ink used in the printing process of the invention is designed to be printed at a substantially constant, elevated temperature. For example, the ink may be modified to include a high viscosity component (e.g., humectant) and/or a polymer that can serve a dual function of increasing the durability of the as-formed reflective feature as well as improving ink performance at elevated temperatures. Thus, in one embodiment, the direct write printing step occurs at a temperature greater than ambient temperature, e.g., greater than about 25°C, greater than about 30°C or greater than about 35°C. In terms of upper range limitations, optionally in combination with these lower range limitations, the direct write printing step optionally occurs at a temperature less than about 40°C, less than about 35°C or less than about 30°C. Thus, in one aspect, the step of direct write printing the ink comprises ink jet printing the ink from an ink reservoir, through a print head, and onto a substrate, wherein the temperature of the ink reservoir or print head is greater than about 25°C, greater than about 30°C, or greater than about 35°C. These temperatures refer to the temperature of either the print head or the ink reservoir during printing, as determined by a thermocouple measurement. Another example of a method for depositing the ink, e.g., an ink jettable or digital ink, employs a heated ink-reservoir and/or print head to decrease the viscosity of the ink composition. It has been surprisingly discovered that heating the ink, the ink jet head, or both, and operating at elevated temperatures reduces temperature fluctuations resulting in a substantially more reliable direct write process. Optionally, the head and/or ink are heated when printing at high speeds as may be necessary when commercially printing the reflective features of the invention, especially when using a ink jet head, preferably a piezo head operating at high frequencies such as greater than 3,000 s⁻¹, preferably greater than 5000 s⁻¹, preferably greater than 7000 s⁻¹, even more preferably greater than 9000 s⁻¹, and yet even more preferably greater than 10,000 s⁻¹, and most preferably greater than 12,000 s⁻¹.

Thus, in an embodiment, the invention relates to a process for printing a reflective feature, preferably a reflective security feature or reflective decorative feature, using a direct write printer, such as ink jet printer, at high speeds or rates where the process optionally involves the step of heating a print head, such as a piezo head, or an ink used in a print head, preferably a piezo head. In a preferred embodiment, the temperature of the ink or the ink jet head is maintained at a temperature of from above room temperature to about 200°C, preferably from about 30°C to about 100°C, more preferably from about 30°C to about 40°C, and most preferably from about 30°C to about 35°C.

Although continuous printing of the inks of the present invention may occur at elevated temperatures, the continuous printing preferably occurs at a substantially constant temperature, e.g., ± 6°C, more preferably ± 4°C, more preferably ± 2°C, more preferably ± 1°C, and most preferably ± 0.5°C. As indicated above, the temperature of the printing process will initially increase until it reaches the above-described relatively constant elevated temperature. Thus, the term, "continuous printing," in this context, refers to a period of time after the ink and/or print head has obtained this relatively constant elevated temperature, e.g., after the temperature of the ink and/or print head has stabilized after start-up.

In a preferred embodiment, a direct write deposition tool, preferably an ink-jet device (e.g., piezo-electric, thermal, drop-on-demand or continuous), is utilized in combination with an ink, e.g., a piezo-electric, thermal, drop-on-demand or continuous ink jet ink or digital ink, to form the reflective features, preferably the reflective, durable and water resistant security or decorative features, of the present invention. Ink-jet devices operate by generating droplets of ink and directing the droplets toward a substrate's surface. In thermal and piezo-electric ink jet printing processes, each drop generated by the ink-jet head and delivered to a substrate surface includes approximately 5 to about 100 picoliters of the ink (e.g., from about 10 to about 100 picoliters or from about 25 to about 100 picoliters of ink), e.g., ink jet ink or digital ink. Variable drop volume ink jet print heads may also be employed. Each drop preferably is substantially spherical, although non-spherical droplets may be used to create an unusual substructure (e.g., each drop forming a head-tail structure) in the printed feature thereby adding a further level of covert security. The position of the ink-jet head is carefully controlled and can be highly automated so that discrete patterns of the composition can be applied to the surface. Ink-jet printers are capable of printing at a rate of about 1000 drops per jet per second or higher (e.g., greater than 3,000 drops per second, greater than about 5,000 drops per second, greater than about 7,000 drops per second, greater than about 9,000 drops per second, greater than about 10,000 drops per second, or even greater than about 12,000 drops per second) and can print various features including linear features with good resolution (e.g., a resolution greater than about 200 dpi (79 dpcm), greater than about 300 dpi (118 dpcm), greater than about 400 dpi (157 dpcm) or greater than about 600 dpi (236 dpcm) in the x and/or y directions) at commercially acceptable rates (provided above).

Ink-jet devices are described in more detail in, for example, U.S. Patent Nos. 4,627,875 and 5,329,293, the disclosures of which are incorporated by reference herein in their entireties. Typically, an ink-jet device includes an ink-jet head, and/or cartridge or other ink delivery system with one or more orifices having a diameter of not greater than about 100 µm, such as from about 5 µm to about 75 µm. Droplets are generated and are directed through the orifice toward the surface being printed. Some ink-jet printers utilize a piezoelectric driven system to generate the droplets. Other ink jet printers utilize thermal or bubblejet ink jet printing approaches.

As described above, in one embodiment the invention is directed to a reflective feature formed, at least in part, in a thermal ink jet printing process or a piezo-electric ink jet printing process, and to processes for forming such reflective features. Thus, in one embodiment, the invention is to a process for forming a reflective feature, preferably a reflective security feature or reflective decorative feature, the process comprising the steps of: (a) providing an ink comprising metallic particles (e.g., the above-described thermal ink jet printable ink compositions or piezo-electric ink jet printable ink compositoins), and (b) thermally or piezo-electrically direct write printing, e.g., thermally or piezo-electrically ink jet printing, the ink to form the reflective feature. For thermal applications, the ink preferably is water-based and has a low VOC content. The feature optionally is at least partially encapsulated with an overcoat layer to make it durable and water resistant, as described in more detail below.

In other aspects, the invention is to inks and cartridges suitable for thermal or piezo-electric ink jet printing applications. Thermal ink jet printing employs print cartridges having a series of tiny electrically-heated chambers. During printing, a pulse of current runs through heating elements in the print cartridge, causing the vehicle to quickly vaporize. This vaporization of vehicle in each chamber forms a bubble, which propels a droplet of ink onto the substrate. When the bubble condenses, surplus ink is sucked back up from the printing surface. The ink's surface tension pumps another charge of ink into the chamber through a narrow channel attached to an ink reservoir. Thermal ink jet printing is further described in Stephen F. Pond, Inkjet Technology and Product Development Strategies 115-122 (2000), the entirety of which is incorporated herein by reference.

Using piezo-electric, thermal, drop-on-demand or continuous ink jet printing techniques, it is possible to deposit the above-described inks on one side or both sides of a substrate. Further, the processes can be repeated to deposit multiple layers of the same or different metallic nanoparticle compositions on a substrate.

In one preferred embodiment, the ink, e.g., piezo-electric, thermal, drop-on-demand or continuous ink jet ink, which comprises metallic particles, preferably metallic nanoparticles, is advantageously confined on the substrate, thereby enabling the formation of reflective features having a small minimum feature size, the minimum feature size being the smallest feature dimension in the x-y axis, such as the width of a line or diameter of a circle. In accordance with the direct-write processes, the present invention comprises the formation of reflective features, preferably reflective security features or reflective decorative features, preferably durable and water resistant reflective features, optionally having a small minimum feature size. For example, the method of the present invention can be used to fabricate reflective features having a minimum feature size of not greater than about 200 µm, e.g., not greater than about 150 µm, not greater than about 100 µm, or not greater than about 50 µm. These feature sizes can be provided using ink-jet printing and other printing approaches that provide droplets or discrete units of composition to a surface. The preferred metallic particle and nanoparticle-containing inks used to form the reflective features of the present invention can be confined to regions on a substrate having a width of not greater than about 200 µm, preferably not greater than about 150 µm, e.g., not greater than about 100 µm, or not greater than about 50 µm.

As discussed above, the substrate on which the ink, e.g., piezo-electric, thermal, drop-on-demand or continuous ink jet ink or digital ink, is printed optionally includes one or more images thereon. Thus, the printing step optionally comprises direct write printing the ink onto a substrate surface having an image to form the reflective feature for enhancing the anti-counterfeiting security of the reflective feature, e.g., as a security feature. Preferably, the ultimately formed printed reflective feature at least partially overlaps the one or more images. The underlying image may be selected from the group consisting of a hologram, a black and white image, a color image, a watermark, a UV fluorescent image, text and a serial number, or a combination thereof. Printing the reflective feature on top of at least a portion of the one or more images is desirable to form a reflective feature having a photo-obscuring effect, described in more detail below.

The underlying substrate image optionally is formed before the metallic particle and/or nanoparticle-containing ink, e.g., piezo-electric, thermal, drop-on-demand or continuous ink jet ink, is printed on the substrate to form the reflective feature, e.g., reflective security feature or reflective decorative feature, of the present invention. In various embodiments, the substrate image may be formed from a printing process selected from the group consisting of direct write printing (e.g., ink jet or other digital printing), intaglio printing, gravure printing, lithographic printing and flexographic printing processes. The image may or may not be formed (in whole or in part) from the same ink used to form the reflective feature that at least partially overlaps the image. For holograms or some other types of images, the image may be formed, at least in part, through a laser etching process. Additionally, the image optionally present on the substrate surface may or may not have a longitudinally varying topography, as described above. In another embodiment, the inks comprising the metallic particles and/or metallic nanoparticles are utilized to print reflective features using any one of or a combination thereof of the following printing technologies: ink jet printing, intaglio, gravure, off set printing and the like.

### IX. Treating the Ink

Simultaneously with or after the above-described printing step, e.g., immediately after the ink deposition (printing) step, the process optionally further comprises the step of treating, e.g., curing, the ink deposited on the substrate. As used herein, the term "treating" means processing, e.g., by drying, heating or by applying radiation (e.g., IR, UV or microwave radiation), under conditions effective to change a physical or chemical property of the composition (deposited ink) being treated or otherwise modifying the composition, e.g., by forming another layer (such as a coating layer) thereon.

The treating optionally comprises simply allowing the deposited ink to dry. In this embodiment, the vehicle in the deposited ink is allowed to vaporize (with or without application of one or more of heat, pressure, IR radiation and/or UV radiation) into the atmosphere to form the feature, e.g., reflective security feature or reflective decorative feature. After drying, the nanoparticles yielded from the ink during drying have a relatively high degree of reflectivity, meaning the nanoparticle film or layer formed from the ink or inks possesses a high degree of optical smoothness (e.g., having a surface roughness less than about 250 nm). With subsequent optional additional treating steps, e.g., heating, rolling, pressing, UV curing, IR curing, etc., the reflectivity increases, meaning that the optical smoothness of the nanoparticle film or layer is increased relative to the reflectivity in the case of just allowing the deposited ink to dry without an additional treating step. Surface roughness of the feature after curing by one or more of heating, rolling, pressing, UV curing, or IR curing, may be on the order of 50 nm or less. Thus, depending on how the deposited ink or inks are treated, the feature optionally comprises a reflective layer comprising the metallic nanoparticles and optionally the colorant, the reflective layer having a route mean square surface roughness that is less than about 250 nm, less than about 100 nm, less than about 50 nm, or less than about 30 nm.

Thus, in one aspect, the process further comprises the step of applying heat, ultraviolet radiation, infrared radiation and/or microwave radiation to the printed or otherwise deposited ink. Non-limiting examples of methods for treating the deposited ink in this manner include methods employing a UV, IR, microwave, heat, laser or a conventional light source. The temperature of the deposited ink can be raised using hot gas or by contact with a heated substrate. This temperature increase may result in further evaporation of vehicle and/or other species. A laser, such as an IR laser, can also be used for heating. An IR lamp or a hot plate can also be utilized. In other aspects, the treating includes, for example, freezing, melting, radiating and otherwise modifying the properties of the applied ink, such as viscosity and/or surface tension, with or without chemical reactions or removal of material from the applied ink. The treating step may be desired, for example, to form a more permanent reflective feature (e.g., by curing the deposited ink) and/or to form a conductive reflective feature.

In an embodiment, the deposited inks used to form the reflective features of the invention, e.g., piezo-electric, thermal, drop-on-demand or continuous ink jet inks or digital inks, are processed for very short times. Short heating times can advantageously prevent damage to the underlying substrate. For example, thermal processing times for ink deposits forming reflective features having a dry thickness on the order of about 200 nm may be, for example, not greater than about 5 seconds, not greater than about 2 seconds, not greater than about 1 second or not greater than about 0.5 seconds. Shorter heating times can be provided using laser (pulsed or continuous wave), lamps, or other radiation. Particularly preferred are scanning lasers with controlled dwell times. When processing with belt and box furnaces or lamps, the hold time may often be not longer than about 60 seconds, e.g., not longer than about 30 seconds, or not longer than about 10 seconds. The preferred heating time and temperature will also depend on the nature of the desired feature, e.g., of the desired reflective feature. It will be appreciated that short heating times may not be beneficial if the solvent or other constituents boil rapidly and form porous-type or other type defects in the feature.

In one embodiment, the inks, e.g., piezo-electric, thermal, drop-on-demand or continuous ink jet inks, which comprise metallic particles and/or nanoparticles, further comprise a photoactive reagent curable by irradiation with UV light. The photoactive reagent may, for example, be a monomer or low molecular weight polymer that polymerizes, optionally in the presence of a photoinitiator, on exposure to UV light resulting in a robust (durable), insoluble metallic reflective layer.

In one particular aspect, the invention is directed to a reflective feature, preferably a reflective security feature or reflective decorative feature, that is UV curable, but does not comprise a UV curable organic composition (e.g., does not comprise an organic UV curable vehicle, monomer or polymer). Thus, in an embodiment, the invention is to a UV curable reflective feature comprising metallic particles and/or metallic nanoparticles that is free of a UV curable organic composition (e.g., free of UV curable vehicle). Without being bound by a particular theory, in this aspect, it is believed that the plasmon resonance of the metallic (e.g., silver) particles and/or metallic nanoparticles, is coincident with the UV radiation causing heating of the surrounding vehicle. This heating results in the vaporization of the vehicle from the substrate surface and thus, the formation of a dry, highly reflective feature. For example, the UV curable reflective feature is curable to form a sintered network of the metallic nanoparticles. Without being bound by a particular theory, it is believed that the UV radiation increases sintering of adjacent metallic particles and/or nanoparticles in the deposited ink, improving reflectivity and conductivity of the ultimately formed reflective feature.

In a further aspect of the present invention, the deposited ink, e.g., piezo-electric, thermal, drop-on-demand or continuous ink jet ink or digital ink, may be treated, e.g., cured, by compression to form the reflective feature, e.g., reflective security feature or reflective decorative feature, of the present invention. This can be achieved by exposing the substrate containing the deposited ink to any of a variety of different processes that "weld" the metallic particles and/or metallic nanoparticles in the ink. Non-limiting examples of these processes include stamping and roll pressing

In one aspect of the present invention, the deposited ink, e.g., piezo-electric, thermal, drop-on-demand or continuous ink jet ink, is converted to a printed reflective feature, e.g., printed reflective security feature or printed reflective decorative feature, at temperatures of not higher than about 300°C, e.g., not higher than about 250°C, not higher than about 225°C, not higher than about 200°C, or not higher than about 185°C. In many cases, it will be possible to form a desirable reflective feature, e.g., reflective security feature (optionally exhibiting some desired degree of conductivity) or reflective decorative feature, at temperatures of not higher than about 150°C, e.g., at temperatures of not higher than about 125°C, or even at temperatures of not higher than about 100°C. In another aspect, the ink is dried at about room temperature to form the reflective feature.

If conductivity is desired in the reflective feature of the present invention, for example as an added security element (described in more detail below), it is beneficial for a weight majority, preferably at least about 60 weight percent, at least about 70 weight percent, at least about 80 weight percent or at least about 90 weight percent of the metallic particles and/or metallic nanoparticles derived from the ink to be at least partially, preferably fully, sintered (or necked) to at least one adjacent metallic nanoparticle in the ultimately formed reflective feature. This sintering may occur at room temperature or during treating of the deposited ink, e.g., with heat, IR radiation, UV radiation, microwave radiation, pressure, or other radiation.

The deposited and treated material, e.g., the reflective feature, preferably the reflective security feature or reflective decorative feature, also may be post-treated. The post-treatment can, for example, include cleaning and/or encapsulation of the reflective feature (e.g., in order to protect the deposited material from oxygen, water or other potentially harmful substances) or other modifications. After the ink, e.g., ink jet or digital ink, has been deposited on the substrate and preferably treated to form the reflective feature, e.g., reflective security feature or reflective decorative feature, of the present invention, it may be desired to form a protective layer over at least a portion of the reflective feature in order to protect it from being damaged, oxidized and/or washed away.

Thus, in another non-limiting example, a protective layer may be printed or applied on top of the printed reflective feature. This protective layer provides protection against, for example, pressure, abrasion, water or chemical agents that are present in the gas or liquids to which the printed structure may be exposed after it is printed. The protective layer may also protect the feature against exposure to human touch, perspiration, or the environment, e.g., humidity, etc. For example, a lacquer, an enamel, a glass, a glass/metal composite, or polymer protective substance may be applied (optionally printed) as an overcoat on top of the reflective feature, e.g., reflective security feature or reflective decorative feature, to inhibit, for example, oxidation or blackening of the reflective feature, and may provide improved gloss as well as scratch and abrasion resistance. Alternatively, lacquers, glass and polymer protective substances are added to the ink compositions in combination with the metallic particles and/or metallic nanoparticles of the invention. A variety of protective substances can be added to the already printed reflective feature, or in the inks themselves prior to printing the reflective features, to impart durability (particularly water durability) and increase the lifetime of the reflective feature. Non-limiting list of exemplary protective substances useful as an overcoat or for inclusion into the ink itself includes lacquers, fluorosilicates, fluorinated polymers (e.g., Zonyl products), shellac (or other similar clear coat technologies), acrylates, UV curable acrylates, polyurethanes, etc., or a combination thereof. The protective layer optionally is deposited on the reflective feature by a printing process selected from the group consisting of direct write printing (e.g., ink jet or digital printing), intaglio printing, gravure printing, offset printing, lithographic printing and flexographic printing processes. Of course, the protective layer may be formed on the reflective feature by any other conventional coating process, well-known to those skilled in the art. In one embodiment, the protective substance is used in the ink for printing the reflective feature, and subsequently the reflective feature is printed with the same or different protective substance. It is possible that if two different protective substances are utilized in this way that they react to form a third protective substance. In addition, dyes or pigments may be added to the overcoat and thus provide color to the reflective metallic reflective feature. See Ernest W. Flick, Printing Ink and Overprint Varnish Formulations, Recent Developments (Noyes Publications 1991) (ISBN 0-8155-1259-7), and Ernest W. Flick, Printing Ink and Overprint Varnish Formulations, Second Edition (Noyes Publications 1999) (ISBN 0-8155-1440-9) for an overview of overcoat technology, the entireties of which are incorporated herein by reference.

For purposes of the present specification, the durability of the reflective features may be determined by ASTM rub test: ASTM D-5264D92, the entirety of which is incorporated herein by reference, wherein the durability is rated on a scale of 1 to 5, a rating of 5 indicating the highest level of adherence. Under this test, the reflective feature preferably has a durability that is rated a 2 or greater, 3 or greater, 4 or greater or 5 on ASTM D-5264D92. For purposes of the present specification, a feature is considered durable if it rates a 3 or greater on the ASTM rub test. In another aspect, the durability of a reflective feature may be determined by using a Scotch tape test, in which pressure-sensitive tape is applied to an area of the feature, which optionally is cross-hatched with scratched lines, and then lifted off. Durability is considered to be adequate if the feature is not pulled off by the tape when it is removed. Substantial removal of a reflective feature with the Scotch tape indicates durability failure under this test. Preferably, the features of the invention pass the Scotch tape test.

### X. Reflective Features

The above-described inks, e.g., piezo-electric, thermal, drop-on-demand or continuous ink jet inks or digital inks, and processes of the present invention may advantageously be used, for example, for the fabrication of printed reflective features, preferably printed reflective security features or printed reflective decorative features, comprising metallic particles, preferably metallic nanoparticles. The reflective features may be used to authenticate virtually any article of manufacture, such as, but not limited to, any branded product, perfume, drugs, tobacco or alcohol products, bottles, clothing (e.g., shirts, pants, jeans, blouses, skirts, dresses, socks, hats, undergarments, etc.), food packaging or containers, sporting goods, posters, and the like, and may be used in documents, for example, passports, bonds, tickets, tax stamps, banknotes, a brand authentication tag, and the like. The terms "feature" as used herein and in the appended claims include any two- or three-dimensional structure including, but not limited to, a line, a shape, an image, a dot, a patch, a continuous or discontinuous layer (e.g., coating) and in particular, any structure that is capable of being formed on any substrate.

In an aspect, the invention is directed to a digitally printed reflective feature. The reflective feature optionally is formed through a piezo-electric ink jet printing process, a thermal ink jet printing process, a drop-on-demand ink jet printing process, a continuous ink jet printing process, or a combination thereof. Thus, in one embodiment, the invention is to a thermally printed reflective feature, meaning a reflective feature formed, at least in part, by a thermal ink jet printing process. The thermally printed reflective feature preferably is reflective, in which case the thermally printed reflective feature preferably is made by a process which comprises thermally ink jet printing an ink comprising metallic particles and/or metallic nanoparticles onto a substrate.

In another embodiment, the invention is to a piezo-electric printed reflective feature, meaning a reflective feature formed, at least in part, by a piezo-electric ink jet printing process. The piezo-electric printed reflective feature preferably is highly reflective, in which case the piezo-electric printed reflective feature preferably is made by a process which comprises piezo-electrically ink jet printing an ink comprising metallic particles and/or metallic nanoparticles onto a substrate.

The reflective feature may be electrically conductive or non-conductive, magnetic or non-magnetic, and may be transparent, semi-transparent and/or reflective in the visible light range and/or in any other range such as, e.g., in the UV and/or IR ranges. As used herein, the term "semitransparent" means capable of allowing at least some light to pass therethrough, e.g., through openings and/or through a translucent layer, while optionally absorbing a portion of the light (including high index of refraction layers). The reflective features preferably are "highly reflective," meaning they exhibit at least some degree of specular (or mirror-like) reflectance, while optionally absorbing some amount (e.g., certain wavelengths) of light. That is, highly reflective features exhibit some degree of specular reflectivity, optionally some degree of colored specular reflectivity. It is contemplated, however, that the highly reflective features may exhibit some degree of diffuse reflectivity, in addition to specular reflectivity. As a percentage of incident light, the highly reflective features preferably reflect greater than 60%, greater than 80% or greater than 90% of the incident light as specular reflectance. In another embodiment, as a percentage of incident light, the highly reflective layers in the reflective features and the features themselves reflect less than 60%, less than about 40%, less than about 20%, less than about 10%, or less than about 5% of the incident light as specular reflectance. Optionally, the reflective feature is not highly reflective, meaning it has a matte appearance.

The present invention, in one embodiment, relates to reflective features comprising metallic particles, preferably metallic nanoparticles, and more preferably to a reflective feature that comprises metallic nanoparticles where the reflective feature is at least partially, preferably fully, reflective. In an embodiment, the reflective features of the invention, preferably the reflective security features or reflective decorative features, are comprised of predominantly, e.g., greater than 50% or greater than 80%, metallic particles and/or metallic nanoparticles (excluding any overcoat and/or protective layers). In another aspect, the present invention relates to a digitally printed reflective feature, preferably a digitally printed reflective security feature or digitally printed reflective decorative feature, that is reflective. The reflective features of the present invention provide various optical reflective features that make the reproduction of the reflective features particularly difficult.

The invention is further directed to processes for forming reflective features, preferably reflective security features or reflective decorative features, from metallic particles, preferably metallic nanoparticles. Additionally or alternatively, the invention is to a process for forming a digitally printed reflective feature. The reflective feature preferably is formed from an ink comprising the metallic particles, preferably metallic nanoparticles. The ink, in one embodiment, is a digital ink comprising metallic particles, preferably metallic nanoparticles, and is capable of being digitally printed through a digital ink jet printer head or cartridge. The process, in one exemplary embodiment, comprises a first step of providing an ink, preferably a digital ink, comprising metallic particles and/or metallic nanoparticles. The process includes a second step of direct write printing, preferably ink jet printing, the ink, preferably a digital ink, onto a substrate to form a reflective feature, preferably a reflective security feature or reflective decorative feature. The substrate optionally includes an image thereon that is covered, at least in part, by a reflective feature having a photo-obscuring effect on the underlying image, as described above. As discussed above, depending on the particular ink formulation, the process optionally also includes a step of treating the printed ink with, for example, heat, microwaves, ultraviolet radiation and/or infrared radiation, under conditions effective to cause the printed ink to cure. In a preferred embodiment, the metallic particles and/or the metallic nanoparticles comprise a metal (e.g., in the form of an elemental metal, alloy, or a metal-containing compound) or a compound having metallic characteristics, and optionally an anti-agglomeration agent, preferably a polymer, and most preferably a hetero-atom containing polymer.

The reflective features of the present invention comprise a wide variety of uses for purposes of providing security and authenticity in many different applications. For example, with the advent and growth of desktop publishing and color-photocopiers, the opportunities for document and coupon fraud have increased dramatically. The reflective features of the present invention have utility in a variety of areas including coupon redemption, inventory security, currency security, compact disk security and driver's license and passport security. The reflective features of the present invention can also be utilized as an effective alternative to magnetic strips. Presently, magnetic strips include identification numbers such as credit card numbers that are programmed at the manufacturer. These strips are prone to failure and are subject to fraud because they are easily copied or modified. To overcome these shortcomings, a conductive reflective feature in the form of a circuit can be printed on the substrate and encoded with specific consumer information. Thus, the present invention can be used to improve the security of credit cards, ATM cards and any other tracking card, which uses magnetic strips as a security measure.

In another security application aspect of the present invention, reflective features, e.g., reflective security features, can be printed on various articles to produce overt security features. For example, such features are useful in applications that provide security to currency (e.g. bank notes) or brand protection to branded goods. By way of non-limiting example, a unique metallic, reflective feature may be digitally printed on a surface to provide an easily recognizable and reflective metallic security feature. The combination of the reflective, metallic nature of the feature and the digital nature of the information printed by, e.g., ink-jet printing, can provide multiple levels of security to the substrate. The security provided by such features may be further enhanced by combining the printed metallic feature with other security features such as optically variable features, embossing, watermarks, threads, holograms, fluorescent substrates, as well as with other features of the metallic ink itself such as electrical conductivity and magnetism.

Generally, the features of the invention may be employed in any product that is subject to counterfeiting, imitation or copying. Thus, in one embodiment, the invention is to a banknote comprising the reflective feature of the present invention. In another embodiment, the invention is to a fiduciary document comprising the reflective feature of the invention. In another embodiment, the invention is to a certificate of authenticity comprising the reflective feature of the invention. In another embodiment, the invention is to a brand authentication tag comprising the reflective feature of the present invention. In another embodiment, the invention is to an article of manufacture comprising a brand authentication tag comprising the reflective feature of the present invention. In another embodiment, the invention is to a tax stamp comprising the reflective feature of the present invention. In another embodiment, the invention is to an alcohol bottle comprising a tax stamp comprising the reflective feature of the present invention. In another embodiment, the invention is to a tobacco product container comprising a tax stamp comprising the reflective feature of the present invention.

The reflective features of the present invention are not limited to security applications. The features may also be employed, for example, for brand protection, brand personalization (e.g., short run personal care/cosmetics), trademarks, or in graphics, decorative features, non-secure documents (e.g., business cards, greeting cards, paper products, etc.), advertisements, mass mailings, wall paper, ceramic tiles, to name but a few. Thus, in one embodiment, the reflective feature comprises a decorative or graphic reflective feature, meaning a feature that is not provided for authentication purposes, but rather primarily for a decorative purpose.

### Multi-Layer Complex Reflective Features

In yet another security application of the present invention, the printed reflective feature, preferably the printed reflective security feature or printed reflective decorative feature of the invention, is used as part of a complex reflective feature that has unique optical characteristics such as an optically variable feature. By way of non-limiting example, the metallic particle and/or metallic nanoparticle-containing ink compositions or formulations of the present invention are used to print a metallic feature in a certain pattern that is highly reflective after curing. This reflective metallic feature (which, in this embodiment, preferably is fully reflective) can be used as the base layer in a series of printed layers to create an optical feature for a complex reflective feature. Ideally, the base layer having a route mean square surface roughness that is less than about 250 nm, less than about 100 nm, less than about 50 nm, or less than about 30 nm.

A second layer can be added over the surface of the reflective metallic layer, the second layer optionally being optically transparent or semitransparent. In one embodiment, the second layer comprises a composition having a different refractive index than the first layer. The composition may, for example, be selected from silica, titania or an organic polymer. The second layer may have a variable thickness that is controlled by the amount of ink deposited and gives rise to a different color shift as a function of the thickness of the second layer.

A third layer optionally is then be printed over the surface of the second layer such that it has the properties of being semi-transparent and reflective with respect to visible light. The third layer, in this embodiment, preferably absorbs a portion of the incoming light. A non-limiting example of this third layer is another coating of the metallic nanoparticle ink that is printed and cured in a way that provides for a very thin layer. In another non-limiting example, the first layer and/or the third layer comprises chromium or Inconel^{™} (a family of nickel-chromium-iron alloys). The effect exhibited by this three layer stack (sandwich) is an optical interference pattern between the light that is reflected by the top layer (the third layer) and the base layer (the first reflective metal ink layer), resulting in a unique color or colors as the article on which these layers are printed is tilted (changed in angle) with respect to the viewer. The optical variations that may be created by this kind of structure can be varied by the composition of the layers that comprise this structure and the thickness of the printed layers, in addition to the unique optical interference patterns created by the stack.

The material of the second (middle) layer of the sandwich can be almost any material that is optically transparent by virtue of either its inherent physical absorption spectrum and/or by the fact that it is comprised of particles with a size in the range that reduces light scattering. The material may be inorganic, organic (such as, e.g., an organic polymer) or a mixture of both. Materials with high refractive index such as, e.g., TiO₂, silica, or MgF₂ provide for enhanced effects. In one embodiment, the second layer comprises or is formed from a Fabry-Perot interference pigment, e.g., a pigment comprising an Al core and having a first coating comprising MgF₂ and a second coating comprising a thin layer of semitransparent Cr. The material may also have some other functional characteristics such as be comprised of luminescent particles such that the feature has a combination of overt and covert properties.

In this embodiment, the various layers used to form the reflective feature may be formed by the same or different printing process, so long as at least one layer is formed by a direct write printing process, preferably piezo-electric, thermal, drop-on-demand or continuous ink jet printing. For example, the first layer optionally is formed by a printing process selected from the group consisting of direct write printing (e.g., piezo-electric, thermal, drop-on-demand or continuous ink jet printing or digital printing), intaglio printing, gravure printing, offset printing, lithographic printing and flexographic printing processes. Optionally, the second layer is formed by a printing process selected from the group consisting of direct write printing (e.g., piezo-electric, thermal, drop-on-demand or continuous ink jet printing or digital printing), intaglio printing, gravure printing, offset printing, lithographic printing and flexographic printing processes. Similarly, the third layer optionally is formed by a printing process selected from the group consisting of direct write printing (e.g., piezo-electric, thermal, drop-on-demand or continuous ink jet printing or digital printing), intaglio printing, gravure printing, offset printing, lithographic printing and flexographic printing processes. Thus, one, two or all of the three layers may be formed by a direct write printing process, such as a digital printing process or an ink jet printing process (piezo-electric, thermal, drop-on-demand or continuous). In other embodiments, more than three layers are employed to provide an even further unique reflective feature.

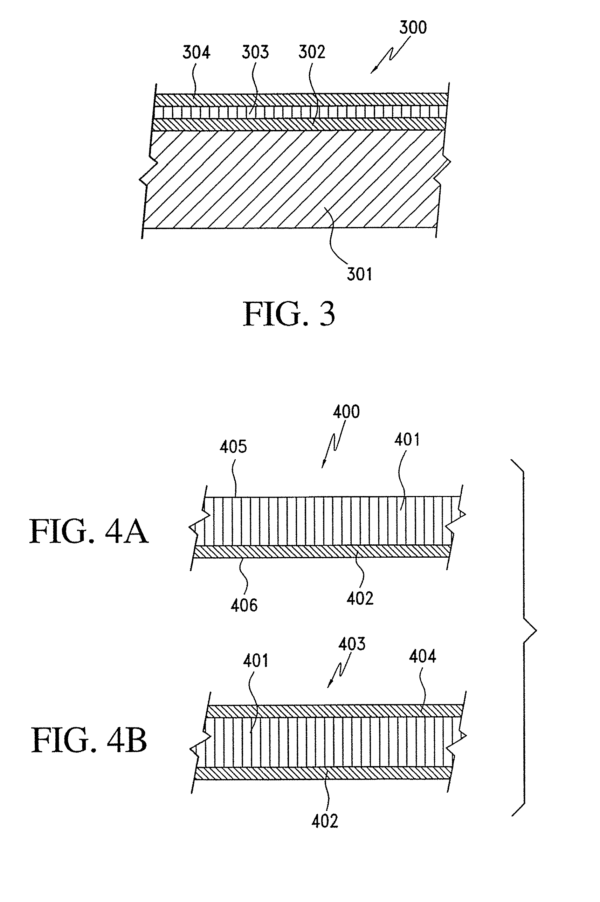

FIG. 3 illustrates a non-limiting reflective feature 300 according to this aspect of the invention. As shown, reflective feature 300 includes a three-layer structure on substrate 301. The three-layer structure includes a first reflective layer 302 disposed on substrate 301. The first reflective layer 302 may be semitransparent or opaque. A translucent layer 303 is disposed on the first reflective layer 302. The transparent layer 303 may comprise an inorganic composition, an organic composition (such as, e.g., an organic polymer) or a mixture of both. The transparent layer 303, for example, optionally comprises one or more of TiO₂, silica, and/or MgF₂. A second reflective layer 304, which preferably is semitransparent (but which preferably has a high index of refraction) is disposed on the translucent layer 303, as shown. The first reflective layer 302 and the second reflective layer 304 may be formed of the same material or different materials. Preferably, the second reflective layer is formed from an ink, preferably a direct write ink such as an ink jet ink or a digital ink comprising metallic particles and/or metallic nanoparticles. The first reflective layer optionally is also formed from this ink. This reflective feature 300 provides a unique optical characteristic, such as an optically variable feature, which is very difficult for counterfeiters to reproduce.

In a related aspect, the reflective feature, preferably reflective security feature or reflective decorative feature, optionally is printed, e.g., through a direct write printing process such as ink jet printing such as piezo-electric, thermal, drop-on-demand or continuous ink jet printing, onto a substrate comprising a sheet of a transparent material (optionally, a polymer) having a thin reflective layer disposed thereon in order to form a complex reflective feature, similar to the one described above, but in a single printing step. In this aspect, the substrate has a transparent surface and an opposing reflective surface that may be semitransparent or opaque. A reflective feature (e.g., reflective layer) is printed, e.g., through a direct write printing process such as piezo-electric, thermal, drop-on-demand or continuous ink jet printing or digital printing, directly onto the transparent surface to form a three-layer complex reflective feature, similar to the three-layer reflective feature described above. The printed layer may similarly be semitransparent (e.g., if the reflective surface on the substrate is opaque) or opaque (e.g., if the reflective surface on the substrate is semitransparent). Thus, in another embodiment the reflective feature of the invention is disposed on (or printed onto) a substrate comprising a sheet of transparent material and a reflective layer, the transparent material having a transparent surface, and the reflective feature being disposed on (or printed onto) the transparent surface. This process for forming a three-layer complex reflective feature requires only a single printing step and is, accordingly, simpler than separately printing all three layers. The resulting three-layer reflective feature may then be secured to a commercial article through any conventional attachment means, e.g., adhesive.

This embodiment is illustrated in FIGS. 4A-B. FIG. 4A illustrates a substrate 400 comprising an optically transparent layer 401. The transparent layer 401 may comprise an inorganic composition, an organic composition (such as, e.g., an organic polymer) or a mixture of both, or comprises a material having a high index of refraction. The transparent layer 401, for example, optionally comprises one or more of TiO₂, silica, and/or MgF₂. Substrate 400 also comprises a first reflective layer 402 disposed on the transparent layer 401, as shown. Optionally, the first reflective layer is semitransparent. Alternatively, the first reflective layer is opaque. As shown, substrate 400 has a transparent surface 405 and an opposing reflective surface 406. As discussed above, an ink, preferably a direct write ink such as an ink jet ink (e.g., piezo-electric, thermal, drop-on-demand or continuous) or a digital ink comprising metallic particles and/or metallic nanoparticles, is printed onto the transparent surface 405 of substrate 400 and optionally treated to form a second reflective layer 404 thereon and form three-layer reflective feature 403, shown in FIG. 4B. reflective feature 403, like reflective feature 300 shown in FIG. 3, provides a unique optical characteristic, such as an optically variable feature, which is very difficult for counterfeiters to reproduce.

By way of non-limiting example, the above-described inks, e.g., piezo-electric, thermal, drop-on-demand or continuous ink jet inks or digital inks, can be printed in such a way as to produce a semi-transparent reflective feature in the visible region of the electromagnetic spectrum or visible spectrum. The semi-transparency of this feature enables multiple reflective features to be combined in unique combinations, one being visible through the other. The extent of optical semi-transparency compared to reflectivity of this feature can be adjusted according to the layer characteristics and the processing conditions. By way of example, a reflective semi-transparent feature can be printed over the surface of other overt features such as color images, black and white images, watermarks, holograms and the like, or combined with covert features such as, e.g., luminescent materials such as UV or anti-stokes phosphors as well as other covert features. The semi-transparent coating may also optionally be electronically conductive and/or magnetic, thereby adding an additional level of covert security to these features. A semi-transparent coating can also be created in a way that results in selective transparency in other regions of the electromagnetic spectrum such as, e.g., the ultraviolet and infrared regions.

In another non-limiting aspect, layers comprising different metallic particle and/or metallic nanoparticle compositions, e.g., inks, may be printed to achieve selective transparency according to the physical characteristics of the particle or nanoparticle metals printed. For example, by printing two different metallic particle and/or nanoparticle-containing inks over a color feature, optical transparency of a specific color is achievable. In addition, by printing two different metallic particle and/or nanoparticle containing inks a specific color is also achievable.

In another embodiment of the invention, multiple semitransparent layers may be formed, optionally printed (e.g., gravure printed, direct write printed, digitally printed and/or ink jet printed), which layers give rise to a metallic "flop" or color shift. In this embodiment, the reflective feature, e.g., reflective security feature or reflective decorative feature, optionally comprises a first semitransparent layer and a second semitransparent layer disposed, at least in part, on top of the first semitransparent layer. Preferably, the first semitransparent layer has a thickness of from about 50 nm to about 500 nm, typically about 200 nm, and a lateral dimension that is significantly greater, e.g., on the order of at least several microns. The second semitransparent layer preferably has a thickness of from about 20 nm to about 500 nm and a lateral dimension that is significantly greater, e.g., on the order of at least several microns. The first semitransparent layer and/or the second semitransparent layer preferably comprises a metal oxide, e.g., mica, silica, titania, iron oxide, chromium oxide, or a mixture thereof, preferably mica, titania and/or silica. In a preferred embodiment, the first semitransparent layer and/or the second semitransparent layer comprise metallic particles and/or metallic nanoparticles, the metallic particles and/or metallic nanoparticles comprising a metal oxide. Specific preferred embodiments comprise various combinations of mica, titania and silica, as provided in Table 1, below:

**TABLE 1**

| **MULTI-LAYER REFLECTIVE FEATURES** | |
|---|---|
| First Layer | Second Layer |
| Mica | Titania |
| Titania | Mica |
| Silica | Mica |
| Mica | Silica |
| Silica | Titania |
| Titania | Silica |

Additionally, the reflective feature optionally comprises a third semitransparent layer disposed, at least in part, on top of the second semitransparent layer. The third semitransparent layer may have a thickness of from about 20 nm to about 500 nm and a lateral dimension that is significantly greater, e.g., on the order of at least several microns. The thicknesses of the second semitransparent layer and/or optional third semitransparent layer may be variable (e.g., having an increasing thickness in the x and/or y directions) to provide different metallic colors. Like the first and second semitransparent layers, the third semitransparent layer optionally comprises metallic particles and/or metallic nanoparticles, which preferably comprise a metal oxide, such as, but not limited to: mica, silica, titania, iron oxide, chromium oxide, or a mixture thereof, mica, silica and titania being particularly preferred. One or more of the first semitransparent layer, the second semitransparent layer and/or the optional third semitransparent layer may be formed by a printing process, e.g., a direct write printing process, preferably a digital printing process or an ink jet printing process. In this manner, reflective features comprising variable information advantageously may be created having unique metallic reflective effects. Table 2, below, provides a list of various semitransparent layers that may be used in combination with one another to create a reflective feature having specific metallic color characteristics. *See* Hugh M. Smith, High Performance Pigments, Wiley-VCH Verlag-GmbH, Weinheim, Germany, (2002), the entirety of which is incorporated herein by reference.

**TABLE 2**

| **MULTI-LAYER REFLECTIVE FEATURES** | | | |
|---|---|---|---|
| First Layer | Second Layer | Third Layer | Resulting Color(s)¹ |
| Mica | TiO₂ | -- | Silver, Yellow, Red, Blue, Green |
| Mica | Fe₂O₃ | -- | Bronze, Copper, Red, Red-Violet, Red-Green |
| Mica | Fe₂O₃ x TiO₂ | -- | Gold |
| Mica | TiO₂ | Fe₂O₃ | Gold |
| Mica | TiO₂ | Iron Blue | Silver-Grey |
| Mica | TiO₂ | Cr₂O₃ | Green |

| | | | |
|---|---|---|---|
| ¹Multiple colors indicates that the color changes, in the order presented, as the thickness of the second reflective layer is increased. | | | |

In another embodiment, the first semitransparent layer and the third semitransparent layer are formed, at least in part, of the same composition, e.g., the same metal oxide. In this aspect, the second semitransparent layer preferably has a refractive index different from the first and third semitransparent layers so as to create a multiple interfaces leading to multiple interference effects giving rise to a "metal-effect" phenomenon. As a result, the layer structure of the reflective feature is constructed on the surface of the substrate by depositing the individual layers rather than by employing pre-fabricated multi-layer pigment particles that are subsequently applied to the substrate. This results in the ability to create novel reflective features that exhibit unusual color effects that cannot be created by depositing pre-fabricated multi-layer metal-effect pigment particles. Additional combinations of layers that form preferred multi-layer reflective features having unique metal effects are provided below in Table 3.

**TABLE 3**

| **MULTI-LAYER REFLECTIVE FEATURES** | | |
|---|---|---|
| First Layer | Second Layer | Third Layer |
| Silica | Titania | Silica |
| Silica | Mica | Silica |
| Titania | Mica | Titania |
| Titania | Silica | Titania |
| Mica | Silica | Mica |
| Mica | Titania | Mica |

Thus, in one embodiment, the invention is to a reflective feature, comprising: (a) a first layer comprising first metallic particles, the first metallic particles comprising a first metal oxide; and (b) a second layer disposed at least in part on the first layer, the second layer comprising second metallic particles comprising a second metal oxide. Preferably, The reflective feature further comprises: (c) a third layer disposed at least in part on the second layer, the third layer comprising third metallic particles comprising the first metal oxide. Optionally, the first metal oxide is selected from the group consisting of silica, titania and mica, wherein the second metal oxide is selected from the group consisting of silica, titania and mica, and wherein the first metal oxide is different from the second metal oxide. In a preferred embodiment, the first metal oxide comprises titania and the second metal oxide comprises mica. This reflective feature preferably exhibits a color shift as it is tilted so as to provide an optical effect that is very difficult for a would-be counterfeiter to reproduces.

Additionally, although at least one of the semitransparent layers preferably is formed (e.g., direct write printed, digitally printed or ink jet printed), at least in part, from an ink comprising metallic particles and/or metallic nanoparticles, one or more of the reflective layers optionally may be formed from ink(s) comprising one or more of the pigment types identified in Table 4, below. These pigment types comprise particles that are generally too large to be printed through direct write, digital or ink jet printing processes.

**TABLE 4**

| **PIGMENT TYPES** | |
|---|---|
| Pigment Type | Examples |
| Metallic platelets | Al, Zn/Cu, Cu, Ni, Au, Ag, Fe (steel), C (graphite) |
| Oxide coated metallic platelets | Surface oxidized Cu-, Zn/Cu-platelets, Fe₂O₃ coated Al-platelets |
| Coated mica platelets | Non-absorbing coating: TiO₂ (rutile), TiO₂ (anatase), ZrO₂, SnO₂, SiO₂; |
| | Selectively absorbing coating: FeOOH, Fe₂O₃, Cr₂O₃, TriO₂₋ₓ, TiOₓN_{y}, CrPO₄, KFe[Fe(CN)₆], colorants; |
| | Totally absorbing coating: Fe₃O₄, TiO, TiN, FeTiO₃, C, Ag, Au, Fe, Mo, Cr, W |
| Platelet-like monocrystals | BiOCl, Pb(OH)₂ x 2 PbCO₃, α-Fe₂O₃, α-Fe₂O₃ x n SiO₂, AlₓFe₂₋ₓO₃, Mn_{y}Fe_{2-y}O₃, AlₓMn_{y}Fe_{2-x-y}O₃, Fe₃O₄, reduced mixed phases, Cu-phthalocyanine |
| Comminuted thin PVD-films | Al, Cr (semitransp.)/SiO₂/Al/SiO₂/Cr (semitransp.) |

A semi-transparent metallic particle coating or semi-transparent metallic nanoparticle coating according to the present invention may be achieved by a number of different methods. By way of non-limiting example, the digital resolution of a feature that is printed can be reduced to reduce the quantity of material printed on a substrate surface, resulting in an increase of the optical transparency by reducing the amount of surface area that is covered. Alternatively, the metallic particle or metallic nanoparticle-containing ink of the invention can be diluted to reduce the metallic particle or nanoparticle content, and printed to result in a thinner layer that fully covers the surface.

The optional treating, e.g., curing, step of the process for forming the reflective features, e.g., reflective security features or reflective decorative features, of the present invention (described above) may also have a strong influence on the level of transparency of a specific layer as compared to its reflectivity. Usually, with a higher loading of metallic particles and/or metallic nanoparticles, a higher curing temperature and a longer curing time will contribute to higher reflectivity and lower optical transparency of printed feature. A lower curing temperature will usually lead to lower reflectivity, but increased transparency. Optimum conditions for achieving a combination of increased optical transparency and increased reflectivity usually include thinner layers of complete coverage of nanoparticles cured to give a more continuous film.

In one security application aspect of the present invention, the metallic particle and/or metallic nanoparticle-containing ink composition or formulation contains a coloring pigment and/or a dye such that when the ink composition or formulation is printed and, optionally treated (e.g., cured), the feature has a metallic luster, and in addition, the feature is of a color that is not characteristic of the metallic composition itself. By way of non-limiting example, a gold luster may be achieved by mixing a yellow dye with a silver nanoparticle ink.

In a further aspect, a fluorescent or phosphorescent additive may be incorporated in the ink, in which case a feature produced therefrom may have a combination of properties that include metallic luster (an overt feature) and luminescence (a covert feature) that can be detected by exposure to electromagnetic radiation of suitable wavelength, for example, by UV light of short (e.g., about 254 nm) or long (e.g., about 365 nm) wavelengths. In one such embodiment, a phosphor such as an IR absorbing phosphor (e.g., erbium and/or ytterbium doped yttrium borate) is utilized as described in U.S. Provisional Patent Application Serial No. 60/731,004, filed October 18, 2005, the entirety of which is incorporated herein by reference. In a further aspect, the pigment or dye may also be luminescent, resulting in a combination of characteristics where the printed reflective feature of the invention has a metallic luster, the color of which (in ordinary light) is determined by the nature of the pigment or dye, but under irradiation with, e.g., UV light, a visible light emission is observed.

In another security application aspect, metallic particle and/or metallic nanoparticle-containing ink compositions or formulations may be printed onto a substrate that is subsequently used to produce security threads. In this embodiment, the ink compositions or formulations may be printed, by any of the processes above, particularly piezo-electric, thermal, drop-on-demand or continuous ink jet printing, onto, for example, paper or an organic polymer substrate together with a number of additional reflective features. The additional use of digital printing assists in providing variable information that creates an additional barrier to counterfeiting of the article to which the reflective feature is applied. In a typical application, the thread may be used to provide an added level of security to banknotes, paper documents such as passports, or teartape for opening consumer products such as bubble gum.

A printed reflective feature, e.g., reflective security feature, made from the inks and by the processes of the present invention can be combined with other reflective features to create additional levels of security. The additional reflective features may be overt or covert. Non-limiting examples of additional overt features include optically variable features, holograms, embossing, water marks and the like. Non-limiting examples of additional covert features include luminescent materials such as UV excitable phosphors, up-conversion phosphors, microprint or microimages. Additionally or alternatively, the reflective feature may posses magnetic characteristics, optionally in combination with an optical effect. For example, the reflective feature may possess a magnetic characteristic (which may serve as a covert reflective feature) as well as exhibit an optical effect (which may serve as an overt and/or a covert reflective feature). This may be the case, for example, if the reflective feature comprises metallic particles that comprise iron oxide.

As indicated above, in a preferred embodiment, the invention is to a reflective feature or part of a complex reflective feature, preferably where the reflective feature or the part of the complex reflective feature is reflective, where the reflective feature or the part of the complex reflective feature comprises metallic particles, preferably metallic nanoparticles. In another aspect, the invention is to a digitally-printed reflective feature, preferably a digitally-printed reflective feature, which optionally comprises metallic particles, preferably metallic nanoparticles. In either case, the reflective feature optionally is disposed on a substrate surface having an image thereon. The reflective feature optionally overlaps at least a portion of the image. In this aspect, the term "reflective feature" may be used to refer exclusively to the reflective layer that overlaps the image or the combination of the reflective layer and the underlying image. In a most preferred embodiment, the reflective feature of the invention comprises variable information printed, created or formed from the ink compositions of the invention, the ink compositions comprising metallic particles and/or metallic nanoparticles.

In a related embodiment, the invention relates to a reflective feature, comprising: (a) a substrate having a surface comprising an image; and (b) a reflective layer comprising metallic particles and/or metallic nanoparticles disposed on at least a portion of the surface and at least partially overlapping the image.

In another embodiment, the invention is a color image that has been printed where one of the colors in the image has been replaced by a metallic reflective ink. The image is ink jet printed using a piezo-electric, thermal, drop-on-demand or continuous ink jet printing process. For example, a typical color image is printed with the primary color set of black, magenta, cyan and yellow. In this invention, for example, the black pixels printed in the image may be replaced with a metallic reflective ink.

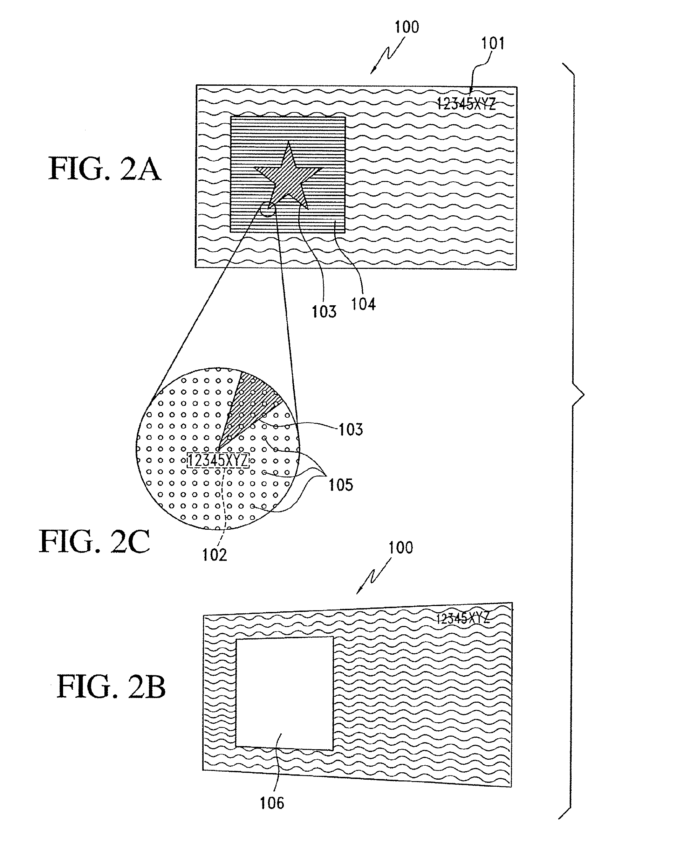

In a preferred aspect, for example, the reflective feature comprises a semitransparent reflective layer, comprising metallic particles, preferably metallic nanoparticles, which feature overlaps at least a portion of, preferably the entirety of, an underlying image and provides angle dependent reflectivity. The nature of the reflective layer causes the image to be viewable therethrough when the feature is viewed at a first angle relative to the substrate surface. When viewed at a second angle, however, the underlying image becomes at least partially obscured as incident light is reflected off of the semitransparent reflective layer towards the observer's eye. The feature in which an image underneath the reflective feature may be obscured at one or more angles is referred to herein as a "photo-obscuring" effect. For example, the second angle preferably is about 180° minus the angle of incident light, relative to the substrate surface. This photo-obscuring effect, described in more detail above, is particularly difficult for a would-be counterfeiter to reproduce. While not being bound by any particular theory, this effect may be derived from the fact that at certain angles the reflective feature may behave like a mirror and reflects light from an incident light source directly toward an observer. The brightness from this reflected light substantially obscures the underlying image from view (as shown in FIG. 2B, discussed below). At other angles, however, the reflective feature does not reflect the incident light toward the viewer, and the underlying image may be clearly viewed by the observer.

In one aspect, the reflective feature comprises a reflective layer comprising metallic particles and/or nanoparticles that is non-continuous. As used herein, the term "non-continuous" means formed, at least in part, of a plurality of separate disconnected objects wherein the average distance between adjacent objects is less than about 500 µm, or formed, at least in part, of a single object having at least one space or gap therein, e.g., a spiral pattern, the space or gap having a width less than about 500 µm. In a preferred embodiment, the non-continuous reflective layer comprises a plurality of reflective images, preferably a plurality of reflective microimages, which provide an additional covert security element.

One purpose of the gaps or spaces in a non-continuous semitransparent reflective layer is to permit an observer, at a first angle, to view an image that is underneath the semitransparent reflective layer. At a second angle, however, incident light should reflect off of the metallic particles and/or metallic nanoparticles in the semitransparent reflective layer and thereby obscure the underlying image from the observer. In order for the gaps or spaces to accomplish this purpose, the average minimum dimension of the gaps or spaces should be relatively small. For example, the average minimum dimension of the gaps or spaces optionally is less than about 500 µm, e.g., less than about 250 µm, less than about 100 µm, or less than about 50 µm.

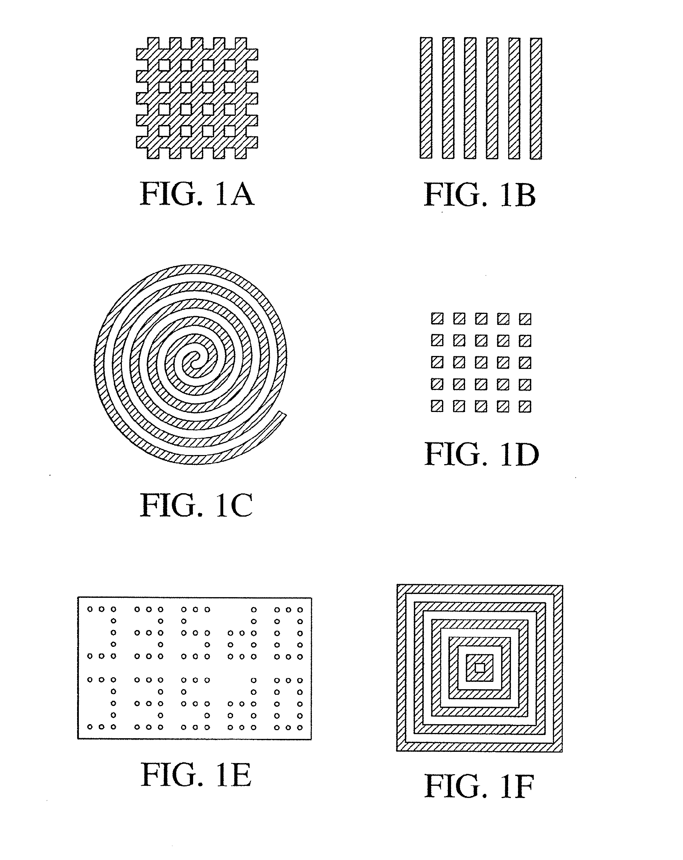

A non-continuous semitransparent reflective layer may be formed by printing a reflective layer comprising metallic particles and/or metallic nanoparticles in a pattern having openings or gaps, which permit light to pass through the reflective layer, at least when viewed at a first angle. The openings or gaps may take a variety of forms. For example, the reflective layer may comprise a cross-hatching pattern (as shown in FIG. 1A), resembling a window screen pattern. In another embodiment, the reflective layer comprises a plurality of parallel lines, as shown in FIG. 1B, where the lines are created, formed, deposited, printed using the ink composition, e.g., piezo-electric, thermal, drop-on-demand or continuous ink jet ink, comprising metallic particles and/or metallic nanoparticles of the invention. The lines can advantageously have an average width of not greater than about 250 µm, such as not greater than about 200 µm, not greater than about 150 µm, not greater than about 100 µm, or not greater than about 50 µm. Although FIG. 1B illustrates straight lines, the lines in the reflective feature may be straight, curved, sinusoidal, overlapping, zigzagged, or a combination thereof. The ends of the lines may or may not be connected to an adjacent line (they are shown unconnected in FIG. 1B). In another aspect, the reflective layer may be a spiral pattern, as shown in FIG. 1C. In another aspect, the reflective layer comprises a plurality of dots, as shown in FIG. 1D. In another embodiment, the reflective layer comprises a plurality of text objects, e.g., alphanumeric objects, which optionally are formed from a plurality of dots, as shown in FIG. IE. In another aspect, the reflective layer comprises a plurality of geometric shapes of similar shape, but of different size, each shape situated within the next larger sized shape, as shown in FIG. 1F. The shapes may include squares, circles, ovals, rectangles, stars, or any other shape. These shapes may, or may not, overlap an adjacent shape, so long as spaces or gaps remain in the reflective layer sufficient to view the underlying latent image. In another aspect, one or more of these embodiments may be combined. These are but a few non-limiting exemplary embodiments in which the reflective feature comprises a semi-transparent reflective layer, and one in the art will recognize that a semi-transparent reflective layer having gaps or openings therein may be formed of infinite other patterns, e.g., repeating or non-repeating characters, text, letters, numbers, stars, circles, squares, images, etc. Other exemplary shapes and patterns are described in Published PCT Application No. WO 2005/080089 A1, which published on September 1, 2005, the entirety of which is incorporated herein by reference.

FIGS. 2A-C presents a non-limiting example of a reflective feature 100 according to one embodiment of the present invention. The reflective feature illustrated displays the above-described photo-obscuring effect. FIG. 2A is an illustration of reflective feature 100 observed from a first angle relative to the substrate surface. At the first angle shown, an overt image 103 comprising a star is clearly visible through a semitransparent reflective layer 104, which overlaps the star image 103. At a second angle, shown in FIG. 2B, however, incident light is reflected off of the semitransparent reflective layer 104 toward the observer thereby substantially obscuring the image 103, as shown by obscured region 106 (in which the image 103 shown in FIG. 2A is not visible).

In the reflective feature 100 shown in FIGS. 2-B, the semi-transparent reflective layer 104 comprises a plurality of reflective microimages 105. The microimages 105 are not visible in FIGS. 2A-B, but are shown in magnified inset FIG. 2C. As used herein, the term "microimage" means a substantially two-dimensional abstract or geometric shape, or a symbolic representation of an object or information having a largest average dimension less than 0.5 mm, e.g., less than about 0.4 mm, less than about 0.3 mm or less than about 0.2 mm, less than about 0.1 mm, less than about 750 µm, less than about 500 µm or less than about 250 µm. The distance between adjacent microimages 105 forms the spaces or gaps described above in reference to FIGS. 1A-E. As shown in inset FIG. 2C, the microimages 105 in the reflective feature 100 of FIGS. 2A-B comprise repeating circles. In another preferred aspect, the microimages comprise a sequence of alphanumeric text.

In one embodiment of the present invention, the reflective feature, e.g., reflective security feature or reflective decorative feature, comprises at least one microimage that comprises variable information. Thus, in one aspect, the reflective feature comprises a reflective layer comprising a plurality of microimages, at least one of the microimages optionally comprising variable information, and wherein, preferably the micorimages are created, formed, deposited printed using ink compositions comprising metallic particles and/or nanoparticles of the invention. As an added security element, the reflective feature optionally includes overt variable information, which may or may not be formed from the metallic nanoparticles discussed above. In one particularly desirable aspect of the invention, the reflective feature comprises overt and covert variable information, where the overt and covert variable information display the same information, or information that may be correlated with one another (e.g., by a mathematical formula or other means).

FIGS. 2A-C illustrate this aspect of the invention. As shown, the reflective feature 100 includes overt variable information 101, which is readily visible with the naked eye. This same variable information is also displayed at least once in the microimages 105 of the semitransparent reflective layer 104, as shown by covert variable information 102. Thus, as an added security element, one can examine the covert variable information 102 with a loop or other simple magnification device, compare the overt variable information 101 with the covert variable information 102, and ensure that they match one another or may be otherwise correlated with one another.

In one embodiment, the microprint of alphanumeric characters or optical recognition characters or symbols, images or the like, are printed, created, formed, or deposited using the ink compositions or formulation of the invention comprising the metallic particles and/or nanoparticles of the invention. In a preferred embodiment, the microprint characters, images, symbol, and the like are modified to increase the dot per square inch or density of the print. This is accomplished by essentially creating a new font in which the number of dots making up the individual characters is reduced such that the basic information, visible image, or value of the character remains unchanged. For example, the number "2" in Times New Roman at 2 point font size is comprised of 33 dots, and for this embodiment of the invention, 20 dots are removed without losing the basic information, visible image or value of the character "2". This technique provides for the ability to microprint various reflective features, optionally comprising variable information, using the ink composition or formulations of the invention with better resolution and visual effect such as semi-transparency.

In another aspect, the reflective feature comprises a continuous semi-transparent reflective, and the continuous semi-transparent reflective layer comprises the metallic particles and/or metallic nanoparticles of the invention. As used herein, the term "continuous" means formed of a single, discreet, connected object, e.g., ink, substantially free of gaps.

The continuous reflective layer may be translucent or opaque. As used herein, the term "translucent" means capable of allowing light to pass therethrough, but not exclusively through spaces or gaps (although some spaces and gaps may or may not be present in a translucent layer). In this aspect, the translucent reflective layer preferably is particularly thin, e.g., on the order of less than about 5 µm, less than about 1 µm, less than about 500 nm or less than about 50 nm, in order to allow light to pass through the semitransparent reflective layer.

The translucent reflective layer may present a photo-obscuring effect similar to the photo-obscuring effect created with a non-continuous reflect layer, discussed above with reference to FIGS. 2A-C. That is, the translucent reflective layer may be disposed on an image on the substrate surface. The image may be viewable through the translucent reflective layer at a first angle relative to the substrate surface, but obscured at a second angle relative to the substrate surface as incident light is reflected off the translucent reflective layer towards the observer.

In another embodiment, the reflective feature comprises a reflective layer disposed on at least a portion of an underlying image having a longitudinally varying topography, described above. If the image(s) do have a longitudinally varying topography, the reflective feature (or the reflective layer thereof) printed on at least a portion of the image preferably presents a translation of the longitudinally varying topography of the overlapped image. It has been found that the reflective features of the present invention, when formed on an underlying image having longitudinally varying topography, provide a security element that is very difficult to reproduce. In this embodiment, the reflective layer displays a likeness of the underlying image, even if the reflective layer is opaque, since the longitudinally varying topography of the underlying image is translated to the overlapping reflective layer.

Thus, in one aspect, the continuous reflective layer at least partially overlaps an image on a substrate surface, the image having a longitudinally varying topography, and the continuous reflective layer presents a translation of the longitudinally varying topography of the overlapped image. In this embodiment, the reflective layer may be continuous or non-continuous. If continuous, the reflective layer in this embodiment may be translucent or opaque. That is, the reflective layer may provide a translation of the underlying image, even if the reflective layer is opaque and the underlying image is not actually visible through the reflective layer.

In one aspect, the average thickness of the reflective feature comprising the metallic particles or metallic nanoparticles, or the reflective feature created, formed, deposited or printed from an ink, e.g., piezo-electric, thermal, drop-on-demand or continuous ink jet ink, comprising the metallic particles and/or metallic nanoparticles, may be greater than about 0.01 µm, e.g., greater than about 0.05 µm, greater than about 0.1 µm, or greater than about 0.5 µm. The thickness can even be greater than about 1 µm, such as greater than about 5 µm. These thicknesses can be obtained by direct write deposition, for example by ink-jet deposition or deposition of discrete units of material in a single pass or in two or more passes. For example, a single layer can be deposited and dried, followed by one or more repetitions of this cycle, if desired. Optionally, the thickness of the deposited reflective feature, e.g., of the reflective layer (optionally an opaque, semitransparent, continuous or non-continuous reflective layer), is less than about 2 µm, less than about 1 µm, less than about 750 nm, or less than about 500 nm.

The distance between the metallic particles and/or metallic nanoparticles in the reflective feature, e.g., reflective security feature, reflective decorative feature or reflective layer thereof, may vary widely. In various embodiments, the average distance between adjacent metallic particles and/or metallic nanoparticles in the reflective feature (e.g., reflective security feature, reflective decorative feature or reflective layer thereof) is less than about 1 µm, e.g., less than about 700 nm, less than about 500 nm, less than about 250 nm, less than about 100 nm or less than about 50 nm.

In another security application aspect of the present invention, the reflective feature, optionally reflective security feature or reflective decorative feature, comprises a conductive (optionally reflective) layer or trace that provides an additional security element in an article. In this aspect, the reflective feature comprises metallic particles and/or metallic nanoparticles and exhibits a conductivity authentication feature. By way of non-limiting example, as described above, a printed metallic reflective feature may be cured under conditions that result in electrical conductivity, e.g., through necking of adjacent metallic nanoparticles, thus providing an additional level of security. The presence of electrical conductivity can be determined, for example, by a contact method such as, e.g., 2-point or 4-point probe measurements, or by contact-less methods in which the presence of a conductive feature is determined in an electric or magnetic field. For example, the printed metallic feature can be constructed with dimensions (thickness, width and length) in which the electrical conductivity of the feature may vary as a function of the position within the feature where the measurement is made. This provides for an additional level of security in this feature. In one embodiment, a majority (e.g., at least about 50 weight percent, at least about 75 weight percent, at least about 80 weight percent or at least about 90 weight percent) of the metallic particles and/or metallic nanoparticles in the reflective feature are necked with at least one adjacent nanoparticle.

Thus, the reflective feature itself or portions or components of the reflective feature, preferably a reflective security feature or reflective decorative feature, optionally are conductive. In a preferred embodiment, the reflective feature comprises metallic particles and/or metallic nanoparticles, the metallic particles and/or metallic nanoparticles comprising a bulk metal. At least a portion, portions, or all of the reflective feature or components of the reflective feature, preferably a reflective security feature or reflective decorative feature, comprising metallic particles and/or metallic nanoparticles, have a resistivity that is not higher than about 30 times, e.g., not higher than about 20 times, not higher than about 10 times, or not higher than about 5 times the resistivity of pure bulk metal(s) of the metallic particles and/or metallic nanoparticles. Thus, in one embodiment, the reflective features of the inventions are conductive, or portions of the reflective features are conductive. Preferably, the reflective features of the invention or portions of the reflective features of the invention are both reflective and comprise conductive portions. Combining reflective and conductive security characteristics further enhances the security of the reflective feature, whether it is a tag, label, banknote, document, etc. Not only would a counterfeiter have to duplicate the reflective nature of the reflective feature of the invention but also the conductivity. In still yet another embodiment, the reflective feature or a portion thereof further includes a magnetic property in combination with reflectivity and/or conductivity. In another aspect, a portion of the reflective feature, e.g., the reflective security feature or reflective decorative feature comprising the metallic particle and/or metallic nanoparticles, has a high conductivity (low resistivity) although the entire reflective feature exhibits little or no conductivity. That is, in one aspect, the invention is to a substantially non-conductive reflective feature comprising conductive portions or components. The conductive portions optionally have a minimum feature size of less than about 1 cm, e.g., less than about 500 µm, less than about 250 µm, less than about 100 µm, or less than about 50 µm. In terms of ranges, the conductive portions optionally have a minimum feature size of from about 10 µm to about 5 cm, e.g., from about 250 µm to about 5 cm, from about 500 µm to about 3 cm, or from about 750 µm to about 2 cm. In this aspect, the region of high conductivity preferably has a resistivity that is less than about 30 times the resistivity of the bulk metal, e.g., less than about 10 times the resistivity of the bulk metal, or less than about 5 times the resistivity of the bulk metal. The entire reflective feature, however, optionally exhibits a resistivity greater than at least 10 times the resistivity of the bulk metal of the metallic particles and/or nanoparticles, e.g., at least 30 times, at least 50 times, at least about 100 times, at least about 500 times or at least about 1000 times the resistivity of the bulk metal. Further, the conductivity of the entire reflective feature optionally is greater than about 10 times less than the conductivity of the conductive portion, e.g., greater than about 100 times less or greater than about 1000 times less than the conductivity of the conductive portion. In one embodiment, the reflective feature comprises two or more types of variable information, e.g., one type that is visually recognizable in the reflective feature (such as a serial number), and another that is variable resistivity of component features. This provides for two levels of security in the feature: overt security (the variable characters) and covert security (the variable resistance of the subcomponents).

In another embodiment, the invention is to a substantially non-conductive UV curable reflective feature comprising conductive portions or components, wherein the reflective feature is free of a UV curable organic composition, e.g., free of an organic UV curable vehicle, monomer or polymer. In this embodiment, the conductive portions or components comprise metallic particles and/or nanoparticles that preferably further comprise an anti-agglomeration substance, for example a polymer, preferably a polymer containing a heteroatom.

Several embodiments of the present invention will be better understood in view of the following non-limiting examples.

### Example 1: Piezoelectric Ink Jetting of Ag-Nanoparticle-Containing Ink

An ink comprising metal nanoparticles (average particle size 50 nm, 5 wt %), ethylene glycol (EG) (38 wt %), diethylene glycol monoethyl ether (DEGME) (38 wt %), and glycerol (19 wt %) was prepared through the dispersion of silver nanoparticles into a 40:40:20 mixture of EG: DEGME: Glycerol. This ink had a viscosity of 21.8 cP at 25°C (100 RPM), and a surface tension of 37 mN/m. This ink was jetted from a SE128 piezoelectric Spectra inkjet printhead, available from Dimatix Inc., while the ink reservoir was kept at 40°C. The ink was jetted continuously on a substrate to form reflective security features for one hour with no interruption at 12 kHz. The ink was also jetted on a web system at speeds of (speed of substrate moving below the head) 100 ft/min, 200 ft/min, and 300 ft/min at resolutions of 300 dpi and 500 dpi. After jetting with on and off times for about 8 hours it was observed that all jets were firing and no capping/clogging negatively affected inkjet performance. The printed reflective security features were extremely reflective as observed by the naked eye.

### Example 2: Thermal Ink Jetting of Ag-Nanoparticle-Containing Ink

An ink comprising of 10 weight percent metal nanoparticles having an average particle size of 20-80nm dispersed in 45 weight percent ethanol, 17 weight percent glycerol, and 28 weight percent ethylene glycol. The ink had a viscosity of about 2 cPs. The ink was loaded into an empty HP51645a ink cartridge (42 mL) (also known as the HP45a). The cartridge was then loaded into a Hewlett Packard Deskjet 1120C Professional Series printer. Several images were then printed and the ink cartridge was removed and reinserted 3 months later, whereupon further printing was achieved after a careful wipe of the nozzle plate with a n ethanol soaked lint free wipe. The ink displayed excellent performance in terms of the sharpness of the image, the reflectivity of the image, and the longevity of the ink. No undesirable printing performance, e.g., clogging, was observed with the ink of Example 3 after printing about 30 mL of ink.

### Example 3: Thermal Ink Jetting of Ag-Nanoparticle-Containing Ink

An ink comprising of 10 weight percent metal nanoparticles having an average particle size of 20-80nm dispersed in 80 weight percent water, 10 weight percent ethylene glycol, The ink had a viscosity of 1.5 cPs and surface tension of 66 mN/m. The ink was loaded into an empty HP51645a ink cartridge (40 mL) and prints were made over the course of three days utilizing a HP1120C deskjet printer until the ink cartridge was empty. The ink displayed excellent performance in terms of the sharpness of the image, the reflectivity of the image, and the longevity of the ink. No undesirable printing performance, e.g., clogging was observed with the ink of Example 3 after printing about 30 mL of ink.

### Example 4: Thermal Ink Jetting of Ag-Nanoparticle-Containing Ink

An ink comprising of 10 weight percent metal nanoparticles having an average particle size of 20-80nm dispersed in 80 weight percent water, 9.9 weight percent ethylene glycol, and 0.1 weight percent of nonionic surfactant of type (PEO/PPO) with a tertiary amine head group was prepared. The ink had a viscosity of 1.6 cPs and surface tension of 41 mN/m. The ink was loaded into an empty HP51645a ink cartridge (40 mL) and prints were made over the course of three days utilizing a HP1120C deskjet printer until the ink cartridge was empty. There was initial drying of the nozzle plate, which resulted in some jets not firing very well at the start of the print. These jets start firing again as the print progresses. The ink displayed excellent performance in terms of the sharpness of the image, the reflectivity of the image, and the longevity of the ink. No undesirable printing performance, e.g., clogging was observed with the ink of Example 4 after printing about 30 mL of ink.

### Example 5: Thermal Ink Jetting of Ag-Nanoparticle-Containing Ink

An ink comprising of 10 weight percent metal nanoparticles having an average particle size of 20-80nm dispersed in 80 weight percent water, 9.8 weight percent ethylene glycol, and 0.2 weight percent of sodium lauryl ether phosphate was prepared. The ink had a viscosity of 1.6 cPs and surface tension of 35 mN/m. The ink was loaded into an empty HP51645a ink cartridge (40 mL) and prints were made over the course of three days utilizing a HP1120C deskjet printer until the ink cartridge was empty. There was initial drying of the nozzle plate, which resulted in some jets not firing very well at the start of the print. These jets start firing again as the print progresses. The ink displayed excellent performance in terms of the sharpness of the image, the reflectivity of the image, and the longevity of the ink. No undesirable printing performance, e.g., clogging was observed with the ink of Example 5 after printing about 30 mL of ink.

### Example 6: Thermal Ink Jetting of Ag-Nanoparticle-Containing Ink

An ink comprising of 10 weight percent metal nanoparticles having an average particle size of 20-80nm dispersed in 80 weight percent water, 9.7 weight percent ethylene glycol, and 0.2 weight percent of sodium lauryl ether phosphate and 0.1 weight percent of nonionic surfactant of type (PEO/PPO) with a tertiary amine head group was prepared. The ink had a viscosity of 1.5 cPs and surface tension of 34 mN/m. The ink was loaded into an empty HP51645a ink cartridge (40 mL) and prints were made over the course of three days utilizing a HP1120C deskjet printer until the ink cartridge was empty. There was no significant drying of the nozzle plate and all the jets fire throughout the print. The ink displayed excellent performance in terms of the sharpness of the image, the reflectivity of the image, and the longevity of the ink. No undesirable printing performance, e.g., clogging, was observed with the ink of Example 6 after printing about 30 mL of ink.

### Example 7: Thermal Ink Jetting of Ag-Nanoparticle-Containing Ink

An ink comprising of 10 weight percent metal nanoparticles having an average particle size of 20-80nm dispersed in 80 weight percent water, 9.7 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.4 cPs and surface tension of 35 mN/m. The ink was loaded into an empty HP51645a ink cartridge (40 mL) and prints were made over the course of three days utilizing a HP1120C deskjet printer until the ink cartridge was empty. There was no significant drying of the nozzle plate and all the jets fire throughout the print. The amount of satellites visible on each print are less than example 6. The ink displayed excellent performance in terms of the sharpness of the image, the reflectivity of the image, and the longevity of the ink. No undesirable printing performance, e.g., clogging was observed with the ink of Example 7 after printing about 30 mL of ink.

### Example 8: Thermal Ink Jetting of Ag-Nanoparticle-Containing Ink

An ink comprising of 10 weight percent metal nanoparticles having an average particle size of 20-80nm dispersed in 80 weight percent water, 9.3 weight percent ethylene glycol, 0.2 weight percent of sodium lauryl ether phosphate and 0.5 weight percent of nonionic surfactant of type (PEO/PPO) with a tertiary amine head group was prepared. The ink had a viscosity of 1.5 cPs and surface tension of 34 mN/m. The ink was loaded into an empty HP51645a ink cartridge (40 mL) and prints were made over the course of three days utilizing a HP1120C deskjet printer until the ink cartridge was empty. There was drying of the nozzle plate, which resulted in some jets not firing very well at the start of the print. These jets start firing again as the print progresses. The ink displayed excellent performance in terms of the sharpness of the image, the reflectivity of the image, but there was some clogging of the nozzles, which was evident by streaks in the prints after printing of 5-7 prints.

### Example 9: Thermal Ink Jetting of Ag-Nanoparticle-Containing Ink

An ink comprising of 10 weight percent metal nanoparticles having an average particle size of 20-80nm dispersed in 80 weight percent water, 8.7 weight percent ethylene glycol, 1 weight percent of polyvinyl alcohol of molecular weight 24,000, 0.2 weight percent of sodium lauryl ether phosphate and 0.1 weight percent of nonionic surfactant of type (PEO/PPO) with a tertiary amine head group was prepared. The ink had a viscosity of 1.2 cPs and surface tension of 38 mN/m. The ink was loaded into an empty HP51645a ink cartridge (40 mL) and prints were made over the course of three days utilizing a HP1120C deskjet printer until the ink cartridge was empty. There was drying of the nozzle plate, which resulted in some jets not firing very well at the start of the print. These jets start firing again as the print progresses. The ink had problems jetting and the image quality was not very good with some blurring of the edges. The reflectivity of the image was good. The nozzles clog, which was evident by streaks in the prints.

### Example 10: Thermal Ink Jetting of Ag-Nanoparticle-Containing Ink

An ink comprising of 10 weight percent metal nanoparticles having an average particle size of 20-80nm dispersed in 80 weight percent water, 7.7 weight percent ethylene glycol, 2 weight percent of polyvinyl alcohol of molecular weight 24,000, 0.2 weight percent of sodium lauryl ether phosphate and 0.1 weight percent of nonionic surfactant of type (PEO/PPO) with a tertiary amine head group was prepared. The ink had a viscosity of 3 cPs and surface tension of 34 mN/m. The ink was loaded into an empty HP51645a ink cartridge (40 mL) and prints were made over the course of three days utilizing a HP1120C deskjet printer until the ink cartridge was empty. The ink did not perform very well and not all jets fired from the beginning. Print quality deteriorated after each print. The nozzles clog, which was evident by streaks in the prints.

### Example 11: Thermal Ink Jetting of Ag-Nanoparticle-Containing Ink

An ink comprising of 10 weight percent metal nanoparticles having an average particle size of 20-80nm dispersed in 80 weight percent water, 8.7 weight percent ethylene glycol, 1 weight percent of polyvinyl alcohol of molecular weight 125,000, 0.2 weight percent of sodium lauryl ether phosphate and 0.1 weight percent of nonionic surfactant of type (PEO/PPO) with a tertiary amine head group was prepared. The ink had a viscosity of 5 cPs and surface tension of 37 mN/m. The ink was loaded into an empty HP51645a ink cartridge (40 mL) and prints were made over the course of three days utilizing a HP1120C deskjet printer until the ink cartridge was empty. This ink was not printed because the viscosity was out of range.

### Example 12: Thermal Ink Jetting of Ag-Nanoparticle-Containing Ink

An ink comprising of 10 weight percent metal nanoparticles having an average particle size of 20-80nm dispersed in 80 weight percent water, 8.9 weight percent ethylene glycol, 1 weight percent of an acrylic polymer Joncryl 586, and 0.1 weight percent of nonionic surfactant of type (PEO/PPO) with a tertiary amine head group was prepared. The ink had a viscosity of 1.6 cPs and surface tension of 41 mN/m. The ink was loaded into an empty HP51645a ink cartridge (40 mL) and prints were made over the course of three days utilizing a HP1120C deskjet printer until the ink cartridge was empty. The ink had problems jetting and the image quality was not very good with blurring of the edges and also a lot of satellites were visible. The nozzles clog, which was evident by streaks in the prints. The ink was rub resistant and water proof after drying.

### Example 13: Thermal Ink Jetting of Ag-Nanoparticle-Containing Ink

An ink comprising of 10 weight percent metal nanoparticles having an average particle size of 20-80nm dispersed in 80 weight percent water, 8.9 weight percent ethylene glycol, 1 weight percent of an acrylic polymer Joncryl 678, and 0.1 weight percent of nonionic surfactant of type (PEO/PPO) with a tertiary amine head group was prepared. The ink had a viscosity of 1.6 cPs and surface tension of 40 mN/m. The ink was loaded into an empty HP51645a ink cartridge (40 mL) and prints were made over the course of three days utilizing a HP1120C deskjet printer until the ink cartridge was empty. The ink had problems jetting and the image quality was not very good with blurring of the edges and also a lot of satellites were visible. The prints were rub resistant and water proof after drying. The nozzles clog, which was evident by streaks in the prints.

### Example 14: Thermal Ink Jetting of Ag-Nanoparticle-Containing Ink

An ink comprising of 10 weight percent metal nanoparticles having an average particle size of 20-80nm dispersed in 80 weight percent water, 8.7 weight percent ethylene glycol, 1 weight percent of an acrylic polymer Joncryl 678, 0.2 weight percent of sodium lauryl ether phosphate and 0.1 weight percent of nonionic surfactant of type (PEO/PPO) with a tertiary amine head group was prepared. The ink had a viscosity of 1.4 cPs and surface tension of 36 mN/m. The ink was loaded into an empty HP51645a ink cartridge (40 mL) and prints were made over the course of three days utilizing a HP1120C deskjet printer until the ink cartridge was empty. There was drying of the nozzle plate, which resulted in some jets not firing very well at the start of the print. These jets start firing again as the print progresses. The ink displayed excellent performance in terms of the sharpness of the image, the reflectivity of the image and the longevity of the ink. The prints were rub resistant and water proof after drying.

### Example 15: Thermal Ink Jetting of Ag-Nanoparticle-Containing Ink

An ink comprising of 10 weight percent metal nanoparticles having an average particle size of 20-80nm dispersed in 80 weight percent water, 7.7 weight percent ethylene glycol, 2 weight percent of an acrylic polymer Joncryl 678, 0.2 weight percent of sodium lauryl ether phosphate and 0.1 weight percent of nonionic surfactant of type (PEO/PPO) with a tertiary amine head group was prepared. The ink had a viscosity of 1.65 cPs and surface tension of 37 mN/m. The ink was loaded into an empty HP51645a ink cartridge (40 mL) and prints were made over the course of three days utilizing a HP1120C deskjet printer until the ink cartridge was empty. The ink had problems jetting and the image quality was not very good with blurring of the edges and also a lot of satellites were visible. The prints were rub resistant and water proof after drying. The nozzles clog, which was evident by streaks in the prints.

### Example 16: Thermal Ink Jetting of Ag-Nanoparticle-Containing Ink

An ink comprising of 10 weight percent metal nanoparticles having an average particle size of 20-80nm dispersed in 80 weight percent water, 8.7 weight percent ethylene glycol, 1 weight percent of an acrylic polymer Joncryl 62, 0.2 weight percent of sodium lauryl ether phosphate and 0.1 weight percent of nonionic surfactant of type (PEO/PPO) with a tertiary amine head group was prepared. The ink had a viscosity of 1.7 cPs and surface tension of 38mN/m. The ink was loaded into an empty HP51645a ink cartridge (40 mL) and prints were made over the course of three days utilizing a HP1120C deskjet printer until the ink cartridge was empty. The ink had problems jetting and the image quality was not very good with blurring of the edges and also a lot of satellites were visible. The prints were rub resistant and water proof after drying. The nozzles clog, which was evident by streaks in the prints.

### Example 17: Thermal Ink Jetting of Ag-Nanoparticle-Containing Ink

An ink comprising of 10 weight percent metal nanoparticles having an average particle size of 20-80nm dispersed in 80 weight percent water, 7.7 weight percent ethylene glycol, 2 weight percent of an acrylic polymer Joncryl 62, 0.2 weight percent of sodium lauryl ether phosphate and 0.1 weight percent of nonionic surfactant of type (PEO/PPO) with a tertiary amine head group was prepared. The ink had a viscosity of 1.7 cPs and surface tension of 39 mN/m. The ink was loaded into an empty HP51645a ink cartridge (40 mL) and prints were made over the course of three days utilizing a HP1120C deskjet printer until the ink cartridge was empty. The ink had problems jetting and the image quality was not very good with blurring of the edges and also a lot of satellites were visible. The prints were rub resistant and water proof after drying. The nozzles clog, which was evident by streaks in the prints. The ink stopped printing after a few prints.

### Example 18: Thermal Ink Jetting of Ag-Nanopmticle-Containing Ink

An ink comprising of 10 weight percent metal nanoparticles having an average particle size of 20-80nm dispersed in 80 weight percent water, 8.7 weight percent ethylene glycol, 1 weight percent of an acrylic polymer Joncryl ECO 675, 0.2 weight percent of sodium lauryl ether phosphate and 0.1 weight percent of nonionic surfactant of type (PEO/PPO) with a tertiary amine head group was prepared. The ink had a viscosity of 1.4 cPs and surface tension of 36 mN/m. The ink was loaded into an empty HP51645a ink cartridge (40 mL) and prints were made over the course of three days utilizing a HP1120C deskjet printer until the ink cartridge was empty. The ink displayed excellent performance in terms of the sharpness of the image, the reflectivity of the image and the longevity of the ink. The prints were rub resistant and water proof after drying.

### Example 19: Thermal Ink Jetting of Ag-Nanoparticle-Containing Ink

An ink comprising of 10 weight percent metal nanoparticles having an average particle size of 20-80nm dispersed in 80 weight percent water, 8.7 weight percent ethylene glycol, 1 weight percent of an acrylic polymer Joncryl 624, 0.2 weight percent of sodium lauryl ether phosphate and 0.1 weight percent of nonionic surfactant of type (PEO/PPO) with a tertiary amine head group was prepared. The ink had a viscosity of 1.4 cPs and surface tension of 37 mN/m. The ink was loaded into an empty HP51645a ink cartridge (40 mL) and prints were made over the course of three days utilizing a HP1120C deskjet printer until the ink cartridge was empty. The ink did not print very well from the start with most jets not firing. The cartridge stops printing after a few prints.

### Example 20: Thermal Ink Jetting of Ag-Nanoparticle-Containing Ink

An ink comprising of 10 weight percent metal nanoparticles having an average particle size of 20-80nm dispersed in 80 weight percent water, 8.7 weight percent ethylene glycol, 1 weight percent of an acrylic polymer Joncryl 1536, 0.2 weight percent of sodium lauryl ether phosphate and 0.1 weight percent of nonionic surfactant of type (PEO/PPO) with a tertiary amine head group was prepared. The ink had a viscosity of 1.65 cPs and surface tension of 37 mN/m. The ink was loaded into an empty HP51645a ink cartridge (40 mL) and prints were made over the course of three days utilizing a HP1120C deskjet printer until the ink cartridge was empty. The ink had problems jetting and the image quality was not very good with blurring of the edges and also a lot of satellites were visible. The prints were rub resistant and water proof after drying. The nozzles clog, which was evident by streaks in the prints.

### Example 21: Thermal Ink Jetting of Ag-Nanoparticle-Containing Ink

An ink comprising of 10 weight percent metal nanoparticles having an average particle size of 20-80nm dispersed in 80 weight percent water, 8.7 weight percent ethylene glycol, 1 weight percent of an acrylic polymer Joncryl 2664, 0.2 weight percent of sodium lauryl ether phosphate and 0.1 weight percent of nonionic surfactant of type (PEO/PPO) with a tertiary amine head group was prepared. The ink had a viscosity of 1.65 cPs and surface tension of 36 mN/m. The ink was loaded into an empty HP51645a ink cartridge (40 mL) and prints were made over the course of three days utilizing a HP1120C deskjet printer until the ink cartridge was empty. The ink had problems jetting and the image quality was not very good with blurring of the edges and also a lot of satellites were visible. The prints were rub resistant and water proof after drying. The nozzles clog, which was evident by streaks in the prints.

### Example 22: Thermal Ink Jetting of Ag-Nanoparticle-Containing Ink

An ink comprising of 10 weight percent metal nanoparticles having an average particle size of 20-80nm dispersed in 80 weight percent water, 8.7 weight percent propylene glycol, 1 weight percent of an acrylic polymer Joncryl 678, 0.2 weight percent of sodium lauryl ether phosphate and 0.1 weight percent of nonionic surfactant of type (PEO/PPO) with a tertiary amine head group was prepared. The ink had a viscosity of 1.7 cPs and surface tension of 38 mN/m. The ink was loaded into an empty HP51645a ink cartridge (40 mL) and prints were made over the course of three days utilizing a HP1120C deskjet printer until the ink cartridge was empty. The ink had problems jetting and the image quality was not very good with blurring of the edges and also a lot of satellites were visible. The prints were rub resistant and water proof after drying. The nozzles clog, which was evident by streaks in the prints.

### Example 23: Thermal Ink Jetting of Ag-Nanoparticle-Containing Ink

An ink comprising of 10 weight percent metal nanoparticles having an average particle size of 20-80nm dispersed in 70 weight percent water, 19.7 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 2.25 cPs and surface tension of 34.5 mN/m. The ink was loaded into an empty HP51645a ink cartridge (40 mL) and prints were made over the course of three days utilizing a HP1120C deskjet printer until the ink cartridge was empty. Some of the jets were out and do not come back on. The print quality was good and the printed features were reflective.

### Example 24: Thermal Ink Jetting of Ag-Nanoparticle-Containing Ink

An ink comprising of 10 weight percent metal nanoparticles having an average particle size of 20-80nm dispersed in 80 weight percent water, 4.8 weight percent propylene glycol, 4.8 weight percent glycerol, 0.2 weight percent of sodium lauryl ether phosphate and 0.1 weight percent of nonionic surfactant of type (PEO/PPO) with a tertiary amine head group was prepared. The ink had a viscosity of 2.19 cPs and surface tension of 33.5mN/m. The ink was loaded into an empty HP51645a ink cartridge (40 mL) and prints were made over the course of three days utilizing a HP1120C deskjet printer, until the ink cartridge was empty. Some of the jets were out and did not come back on. Printing got worse after each print and the print quality went from bad to worse.

### Example 25: Thermal Ink Jetting of Ag-Nanoparticle-Containing Ink

An ink comprising of 10 weight percent metal nanoparticles having an average particle size of 20-80nm dispersed in 80 weight percent water, 5 weight percent propylene glycol, 5 weight percent glycerol, 0.2 weight percent of sodium lauryl ether phosphate and 0.1 weight percent of nonionic surfactant of type (PEO/PPO) with a tertiary amine head group was prepared. The ink had a viscosity of 1.53 cPs and surface tension of 34.1mN/m. The ink was loaded into an empty HP51645a ink cartridge (40 mL) and prints were made over the course of three days utilizing a HP1120C deskjet printer, until the ink cartridge was empty. At the start, the first few prints had some jets drop out, but by print four, the prints seemed to get better and more stable until the end.

### Example 26: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 675, excess ammonium hydroxide, 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.74cPs and surface tension of 34.5mN/m. The ink was loaded into an empty HP51645a ink cartridge (40 mL) and prints were made over the course of three days utilizing a HP1120C deskjet printer, until the ink cartridge was empty. The jets started to drop out by print two. A few more dropped out by print five. Most of the jets dropped out on print thirteen and then the printing stopped.

### Example 27: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 675, Dimethylethanolamine, 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.78cPs and surface tension of 35.2mN/m. The ink was loaded into an empty HP51645a ink cartridge (40 mL) and prints were made over the course of three days utilizing a HP1120C deskjet printer, until the ink cartridge was empty. The jets started to drop out by print three. More jets dropped out by print nine. There were also streaks throughout the prints.

### Example 28: Thermal Ink Jetting of Ag-Nanoparticle-Containing Ink

An ink comprising of 10 weight percent metal nanoparticles having an average particle size of 20-80nm dispersed in 80 weight percent water, 10 weight percent glycerol, 0.2 weight percent of sodium lauryl ether phosphate and 0.1 weight percent of nonionic surfactant of type (PEO/PPO) with a tertiary amine head group was prepared. The ink had a viscosity of 1.48 cPs and surface tension of 35.2mN/m. The ink was loaded into an empty HP51645a ink cartridge (40 mL) and prints were made over the course of three days utilizing a HP1120C deskjet printer, until the ink cartridge was empty. The jets started to drop out by print three. More jets dropped out by print eight. A few of the jets came back on by print eleven. But then, drop out again on print thirteen. A few of the jets came back on by print nineteen.

### Example 29: Thermal Ink Jetting of Ag-Nanoparticle-Containing Ink

An ink comprising of 10 weight percent metal nanoparticles having an average particle size of 20-80nm dispersed in 80 weight percent water, 5 weight percent polyethylene glycol MW 200-600, 10 weight percent glycerol, 0.2 weight percent of sodium lauryl ether phosphate and 0.1 weight percent of nonionic surfactant of type (PEO/PPO) with a tertiary amine head group was prepared. The ink had a viscosity of 1.93cPs and surface tension of 34.1mN/m. The ink was loaded into an empty HP51645a ink cartridge (40 mL) and prints were made over the course of three days utilizing a HP1120C deskjet printer, until the ink cartridge was empty. All of the regular prints looked great and none of the jets dropped out. On the glossy prints, the first few prints had some streaks, but the second and third prints got much better.

### Example 30: Thermal Ink Jetting of Ag-Nanoparticle-Containing Ink

An ink comprising of 10 weight percent metal nanoparticles having an average particle size of 20-80nm dispersed in 80 weight percent water, 10 weight percent polyethylene glycol MW 200-600, 0.2 weight percent of sodium lauryl ether phosphate and 0.1 weight percent of nonionic surfactant of type (PEO/PPO) with a tertiary amine head group was prepared. The ink had a viscosity of 1.93cPs and surface tension of 34.1mN/m. The ink was loaded into an empty HP51645a ink cartridge (40 mL) and prints were made over the course of three days utilizing a HP1120C deskjet printer, until the ink cartridge was empty. On print two, some jets dropped out but came back on. The following prints looked good. The first glossy print had very small streaks, but the second and third looked great.

### Example 31: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 675, excess Dimethylethanolamine, 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.83cPs and surface tension of 33.4mN/m. The ink was loaded into an empty HP51645a ink cartridge (40 mL) and prints were made over the course of three days utilizing a HP1120C deskjet printer, until the ink cartridge was empty. The Dimethylethanolamine seemed to help the prints. There was less streaking.

### Example 32: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl ECO 675, 1 weight percent ammonium nitrate, 10 weight percent ethylene glycol, 0.2 weight percent of sodium lauryl ether phosphate and 0.1 weight percent of nonionic surfactant of type (PEO/PPO) with a tertiary amine head group was prepared. The ink had a viscosity of 1.56cPs and surface tension of 36.3mN/m. The ink was loaded into an empty HP51645a ink cartridge (40 mL) and prints were made over the course of three days utilizing a HP1120C deskjet printer, until the ink cartridge was empty. The prints did not improve, possibly because of the excess ammonium nitrate.

### Example 33: Thermal Ink Jetting of Ag-Nanoparticle-Containing Ink

An ink comprising of 10 weight percent metal nanoparticles having an average particle size of 20-80nm dispersed in 80 weight percent water, 2 weight percent Joncryl 675 dissolved in Dimethylethanolamine, 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.87cPs and surface tension of 36.3mN/m. The ink was loaded into an empty HP51645a ink cartridge (40 mL) and prints were made over the course of three days utilizing a HP1120C deskjet printer, until the ink cartridge was empty. First two prints leaked, there were many jets out and a lot of streaks on the glossy prints.

### Example 34: Thermal Ink Jetting of Ag-Nanoparticle-Containing Ink

An ink comprising of 10 weight percent metal nanoparticles having an average particle size of 20-80nm dispersed in 80 weight percent water, 2 weight percent Joncryl 675, 10 weight percent propylene glycol, 0.1 weight percent ammonium nitrate, 0.2 weight percent of sodium lauryl ether phosphate and 0.1 weight percent of nonionic surfactant of type (PEO/PPO) with a tertiary amine head group was prepared. The ink had a viscosity of 1.78cPs and surface tension of 35.8mN/m. The ink was loaded into an empty HP51645a ink cartridge (40 mL) and prints were made over the course of three days utilizing a HP1120C deskjet printer, until the ink cartridge was empty. Some of the jets at the top of the page dropped out and then stopped completely. The glossy prints were streaky.

### Example 35: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 690, 10 weight percent ethylene glycol, 0.2 weight percent of sodium lauryl ether phosphate and 0.1 weight percent of nonionic surfactant of type (PEO/PPO) with a tertiary amine head group was prepared. The ink had a viscosity of 1.8cPs and surface tension of 36.4mN/m. The ink was loaded into an empty HP51645a ink cartridge (40 mL) and prints were made over the course of three days utilizing a HP1120C deskjet printer, until the ink cartridge was empty. The printing started out ok, but then some of the jets at the top of the page dropped out and then stopped completely by the middle of the printing. Glossy prints were streaky.

### Example 36: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 675 dissolved in dimethylethanolamine, 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.74cPs and surface tension of 35.5mN/m. The ink was loaded into an empty HP51645a ink cartridge (40 mL) and prints were made over the course of three days utilizing a HP1120C deskjet printer, until the ink cartridge was empty. Some of the jets at the top of the page were dropping out and then stopped completely. Glossy prints were streaky.

### Example 37: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine, 10 weight percent ethylene glycol, 0.2 weight percent of sodium lauryl ether phosphate and 0.1 weight percent of nonionic surfactant of type (PEO/PPO) with a tertiary amine head group was prepared. The ink had a viscosity of 1.62cPs and surface tension of 36.3mN/m. The ink was loaded into an empty HP51645a ink cartridge (40 mL) and prints were made over the course of three days utilizing a HP1120C deskjet printer, until the ink cartridge was empty. Printing started out ok, but by the sixth print the jets started dropping out. Glossy prints were streaky.

### Example 38: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 675, 10 weight percent propylene glycol, .1 weight percent ammonium nitrate, 0.2 weight percent of sodium lauryl ether phosphate and 0.1 weight percent of nonionic surfactant of type (PEO/PPO) with a tertiary amine head group was prepared. The ink had a viscosity of 1.62cPs and surface tension of 35.4mN/m. The ink was loaded into an empty HP51645a ink cartridge (40 mL) and prints were made over the course of three days utilizing a HP1120C deskjet printer, until the ink cartridge was empty. Print one has a lot of streaks, which get worse with each print. The printing stops after print two.

### Example 39: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682, dimethylethanolamine, 10 weight percent ethylene glycol, 0.2 weight percent of sodium lauryl ether phosphate and 0.1 weight percent of nonionic surfactant of type (PEO/PPO) with a tertiary amine head group was prepared. The ink had a viscosity of 1.8cPs and surface tension of 36.5mN/m. The ink was loaded into an empty HP51645a ink cartridge (40 mL) and prints were made over the course of three days utilizing a HP1120C deskjet printer, until the ink cartridge was empty. Top jets out on about 7 of the first 10 prints. After that it printed well.

### Example 40: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine, 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.74cPs and surface tension of 36.6mN/m. The ink was loaded into an empty HP51645a ink cartridge (40 mL) and prints were made over the course of three days utilizing a HP1120C deskjet printer, until the ink cartridge was empty. First two prints were bad, cartridge was shaken. After that, prints were good except for a few jets out on all prints.

### Example 41: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine (ph 8.5), 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.72cPs and surface tension of 36.6mN/m. The ink was loaded into an empty HP51645a ink cartridge (40 mL) and prints were made over the course of three days utilizing a HP1120C deskjet printer, until the ink cartridge was empty. Printing started out ok, but by the second print the jets started dropping out. Glossy prints looked good and there wasn't much streaking.

### Example 42: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine, 10 weight percent glycerol, 0.2 weight percent of sodium lauryl ether phosphate and 0.1 weight percent of nonionic surfactant of type (PEO/PPO) with a tertiary amine head group was prepared. The ink had a viscosity of 1.57cPs and surface tension of 36.9mN/m. The ink was loaded into an empty HP51645a ink cartridge (40 mL) and prints were made over the course of three days utilizing a HP1120C deskjet printer, until the ink cartridge was empty. Some of the jets are dropping out at the top of the page. By the third print, some jets above the solid section drop out. The glossy prints looked great.

### Example 43: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine, 10 weight polyethylene glycol MW 200-600, 0.2 weight percent of sodium lauryl ether phosphate and 0.1 weight percent of nonionic surfactant of type (PEO/PPO) with a tertiary amine head group was prepared. The ink had a viscosity of 1.7cPs and surface tension of 36.3mN/m. The ink was loaded into an empty HP51645a ink cartridge (40 mL) and prints were made over the course of three days utilizing a HP1120C deskjet printer, until the ink cartridge was empty. The first print had a lot of jets drop out and the printing stopped by the fourth print. The cartridge was shaken and the printing was great. Glossy prints looked great too.

### Example 44: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine (pH 9.9), 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.75cPs and surface tension of 36.6mN/m. The ink was loaded into an empty HP51645a ink cartridge (40 mL) and prints were made over the course of three days utilizing a HP1120C deskjet printer, until the ink cartridge was empty. Printed well, but some of the jets drop out throughout the prints toward the top and right sections of the page. There was a slightly pinkish tint on the glossy prints.

### Example 45: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine (pH 10.1), 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.75cPs and surface tension of 36.5mN/m. The ink was loaded into an empty HP51645a ink cartridge (40 mL) and prints were made over the course of three days utilizing a HP1120C deskjet printer, until the ink cartridge was empty. Printed well, but some of the jets drop throughout the top right section of the prints. There is a slight pinkish tint on the glossy prints.

### Example 46: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine (pH 10.3), 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.8cPs and surface tension of 36.4mN/m. The ink was loaded into an empty HP51645a ink cartridge (40 mL) and prints were made over the course of three days utilizing a HP1120C deskjet printer, until the ink cartridge was empty. After the fourth print, the cartridge was taken out and shaken. The next day, there appeared to be a pink haze on the glossy prints.

### Example 47: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine (pH 10.3), 10 weight percent propylene glycol, 0.2 weight percent of sodium lauryl ether phosphate and 0.1 weight percent of nonionic surfactant of type (PEO/PPO) with a tertiary amine head group was prepared. The ink had a viscosity of 1.84cPs and surface tension of 36.5mN/m. The ink was loaded into an empty HP51645a ink cartridge (40 mL) and prints were made over the course of three days utilizing a HP1120C deskjet printer, until the ink cartridge was empty. Printed well. The next day there appeared to be a pink haze on the glossy prints.

### Example 48: Thermal Ink Jetting of Ag-Nanoparticle-Containing Ink

An ink comprising of 5 weight percent metal nanoparticles having an average particle size of 20-80nm dispersed in 80 weight percent water, 1 weight percent Joncryl 682 dissolved in dimethylethanolamine, 10 weight percent polyethylene glycol MW 200-600, 0.2 weight percent of sodium lauryl ether phosphate and 0.1 weight percent of nonionic surfactant of type (PEO/PPO) with a tertiary amine head group was prepared. The ink had a viscosity of 1.65cPs and surface tension of 36.4mN/m. The ink was loaded into an empty HP51645a ink cartridge (40 mL) and prints were made over the course of three days utilizing a HP1120C deskjet printer, until the ink cartridge was empty. Printed really well.

### Example 49: Thermal Ink Jetting of Ag-Nanoparticle-Containing Ink

An ink comprising of 7.5 weight percent metal nanoparticles having an average particle size of 20-80nm dispersed in 80 weight percent water, 1 weight percent Joncryl 682 dissolved in dimethylethanolamine, 10 weight percent polyethylene glycol MW 200-600, 0.2 weight percent of sodium lauryl ether phosphate and 0.1 weight percent of nonionic surfactant of type (PEO/PPO) with a tertiary amine head group was prepared. The ink had a viscosity of 1.78cPs and surface tension of 36.4mN/m. The ink was loaded into an empty HP51645a ink cartridge (40 mL) and prints were made over the course of three days utilizing a HP1120C deskjet printer, until the ink cartridge was empty. Printed really well.

### Example 50: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine, 10 weight percent propylene glycol, 0.1 weight percent surfynol DF-75, 0.2 weight percent of sodium lauryl ether phosphate and 0.1 weight percent of nonionic surfactant of type (PEO/PPO) with a tertiary amine head group was prepared. The ink had a viscosity of 1.86cPs and surface tension of 36.7mN/m. The ink was loaded into an empty HP51645a ink cartridge (40 mL) and prints were made over the course of three days utilizing a HP1120C deskjet printer, until the ink cartridge was empty. Ink leaked all over the first two prints. There were satellites on the first print. There was also quite a bit of jet drop off.

### Example 51: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine, 10 weight percent propylene glycol, 0.2 weight percent surfynol DF-75, 0.2 weight percent of sodium lauryl ether phosphate and 0.1 weight percent of nonionic surfactant of type (PEO/PPO) with a tertiary amine head group was prepared. The ink had a viscosity of 1.78cPs and surface tension of 36.7mN/m. The ink was loaded into an empty HP51645a ink cartridge (40 mL) and prints were made over the course of three days utilizing a HP1120C deskjet printer, until the ink cartridge was empty. There was quite a bit of jet drop out.

### Example 52: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine, 10 weight percent propylene glycol, 0.5 weight percent surfynol DF-75, 0.2 weight percent of sodium lauryl ether phosphate and 0.1 weight percent of nonionic surfactant of type (PEO/PPO) with a tertiary amine head group was prepared. The ink had a viscosity of 1.84cPs and surface tension of 36.5mN/m. The ink was loaded into an empty HP51645a ink cartridge (40 mL) and prints were made over the course of three days utilizing a HP1120C deskjet printer, until the ink cartridge was empty. Some jets out at top and bottom throughout all printing

### Example 53: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine, 15 weight percent polyethylene glycol MW 200-600, 0.2 weight percent of sodium lauryl ether phosphate and 0.1 weight percent of nonionic surfactant of type (PEO/PPO) with a tertiary amine head group was prepared. The ink had a viscosity of 2.2cPs and surface tension of 35.7 mN/m. The ink was loaded into an empty HP51645a ink cartridge (40 mL) and prints were made over the course of three days utilizing a HP1120C deskjet printer, until the ink cartridge was empty. Printed very well.

### Example 54: Thermal Ink Jetting of Ag-Nanoparticle-Containing Ink

An ink comprising of 10 weight percent metal nanoparticles having an average particle size of 20-80nm dispersed in 80 weight percent water, 1 weight percent Joncryl 682 dissolved in dimethylethanolamine, 20 weight percent polyethylene glycol MW 200-600, 0.2 weight percent of sodium lauryl ether phosphate and 0.1 weight percent of nonionic surfactant of type (PEO/PPO) with a tertiary amine head group was prepared. The ink had a viscosity of 2.8 cPs and surface tension of 35.3 mN/m. The ink was loaded into an empty HP51645a ink cartridge (40 mL) and prints were made over the course of three days utilizing a HP1120C deskjet printer, until the ink cartridge was empty. First print was bad, cartridge was shaken. After that, it printed very well. No jets were out but the glossy prints solid section had some bubbly streaks.

### Example 55: Piezoelectric Ink Jetting of Ag-Nanoparticle-Containing Ink

An Ink comprising metal nanoparticles (average particle size 50 nm, 10 wt %), ethylene glycol (50 wt %), ethanol (25% wt), glycerol (25% wt). This ink had a viscosity of 15.7cP at 25°C (100 RPM), and a surface tension of 33.3mN/m. This ink was jetted from a SE128 piezoelectric Spectra inkjet printhead, available from Dimatix Inc. The ink was jetted continuously on a substrate to form reflective security features.. The ink was also jetted on a web system at speeds of (speed of substrate moving below the head) 100 ft/min, 200 ft/min, and 300 ft/min at resolutions of 300 dpi and 500 dpi. After jetting with on and off times for about 8 hours it was observed that all jets were firing and no capping/clogging negatively affected inkjet performance. The printed reflective security features were extremely reflective as observed by the naked eye.

### Example 56: Piezoelectric Ink Jetting of Ag-Nanoparticle-Containing Ink

An Ink comprising metal nanoparticles (average particle size 50 nm, 10 wt %), ethylene glycol (40 wt %), ethanol (30% wt), glycerol (30% wt). This ink had a viscosity of 15.7cP at 25°C (100 RPM), and a surface tension of 33.3mN/m. This ink was jetted from a SE128 piezoelectric Spectra inkjet printhead, available from Dimatix Inc. The ink was jetted continuously on a substrate to form reflective security features. The ink was also jetted on a web system at speeds of (speed of substrate moving below the head) 100 ft/min, 200 ft/min, and 300 ft/min at resolutions of 300 dpi and 500 dpi. After jetting with on and off times for about 8 hours it was observed that all jets were firing and no capping/clogging negatively affected inkjet performance. The printed reflective security features were extremely reflective as observed by the naked eye.

A summary of the results of examples 1-56 is provided below in Table 5.

**TABLE 5**

| **SUMMARY OF EXAMPLES 1-56** | | | | |
|---|---|---|---|---|
| EEx | Composition | Surface Tension (mN/m) | Visc. (cP) | Comments |
| 1 | 40:40:20 mixture of EG:DEGME: Glycerol Piezo ink | 37 | 21.8 | After jetting with on and off times for about 8 hours it was observed that all jets were firing and no capping/clogging negatively affected inkjet performance. The printed reflective security features were extremely reflective as observed by the naked eye. (Print Rating: 5 (1=Poor, 5=Good)) |
| 2 | 45:28:17 mixture of EtOH:EG:Glycerol Thermal ink | NM | 2 | The ink displayed excellent performance in terms of the sharpness of the image, the reflectivity of the image, and the longevity of the ink. No undesirable printing performance, e.g., clogging, was observed with the ink of Example 3 after printing about 30 mL of ink (Print Rating: 5) |
| 3 | 80:10 mixture of water:EG | 66 | 1.5 | The ink displayed excellent performance in terms of the sharpness of the image, the reflectivity of the image, and the longevity of the ink. No undesirable printing performance, e.g., clogging was observed with the ink of Example 3 after printing about 30 mL of ink. (Print Rating: 4) |
| 4 | 80:9.9:01 mixture of water: EG: Solsperse 20000 | 41 | 1.6 | The ink displayed excellent performance in terms of the sharpness of the image, the reflectivity of the image, and the longevity of the ink. No undesirable printing performance, e.g., clogging was observed with the ink of Example 4 after printing about 30 mL of ink. (Print Rating: 4) |
| 5 | 80:9.9:01 mixture of water: EG: DLP-10 | 35 | 1.6 | The ink displayed excellent performance in terms of the sharpness of the image, the reflectivity of the image, and the longevity of the ink. No undesirable printing performance, e.g., clogging was observed with the ink of Example 5 after printing about 30 mL of ink. (Print Rating: 4) |
| 6 | 80:9.9:02:0.1 mixture of water: EG: DLP-10: Solsperse 20000 | 34 | 1.5 | The ink displayed excellent performance in terms of the sharpness of the image, the reflectivity of the image, and the longevity of the ink. No undesirable printing performance, e.g., clogging was observed with the ink of Example 5 after printing about 30 mL of ink. (Print Rating: 5) |
| 7 | 80:9.9:02:0.1 mixture of water: PG: DLP-10: Solsperse 20000 | 35 | 1.4 | There was no significant drying of the nozzle plate and all the jets fire throughout the print. The amount of satellites visible on each print are less than example 6. The ink displayed excellent performance in terms of the sharpness of the image, the reflectivity of the image, and the longevity of the ink. No undesirable printing performance, e.g., clogging was observed with the ink of Example 7 after printing about 30 mL of ink. (Print Rating: 5) |
| 8 | 80:9.3:02:0.5 mixture of water: EG: DLP-10: Solsperse 20000 | 34 | 1.5 | There was drying of the nozzle plate, which resulted in some jets not firing very well at the start of the print. These jets start firing again as the print progresses. The ink displayed excellent performance in terms of the sharpness of the image, the reflectivity of the image, but there was some clogging of the nozzles, which was evident by streaks in the prints after printing of 5-7 prints. (Print Rating: 4) |
| 9 | 80 : 8.3 :1 : 02: 0.5 mixture of water : EG: Celvol 203: DLP-10: Solsperse 20000 | 38 | 1.2 | There was drying of the nozzle plate, which resulted in some jets not firing very well at the start of the print. These jets start firing again as the print progresses. The ink had problems jetting and the image quality was not very good with some blurring of the edges. The reflectivity of the image was good. The nozzles clog, which was evident by streaks in the prints. (Print Rating: 3) |
| 10 | 80 : 7.3 :2 : 02: 0.5 mixture of water : EG: Celvol 203: DLP-10: Solsperse 20000 | 34 | 3 | The ink did not perform very well and not all jets fired from the beginning. Print quality deteriorated after each print. The nozzles clog, which was evident by streaks in the prints. (Print Rating: 2) |
| 11 | 80 : 8.3 :1 : 02: 0.5 mixture of water: EG: Celvol 0815: DLP-10: Solsperse 20000 | 37 | 5 | Viscosity out of range (Print Rating: 1) |
| 12 | 80:8.9:1:01 mixture of Water: EG: Joncryl 586: Solsperse 20000 | 41 | 1.6 | The ink had problems jetting and the image quality was not very good with blurring of the edges and also a lot of satellites were visible. The nozzles clog, which was evident by streaks in the prints. The ink was rub resistant and water proof after drying. (Print Rating: 2) |
| 13 | 80:8.9:1:01 mixture of Water: EG: Joncryl 678: Solsperse 20000 | 40 | 1.65 | The ink had problems jetting and the image quality was not very good with blurring of the edges and also a lot of satellites were visible. The prints were rub resistant and water proof after drying. The nozzles clog, which was evident by streaks in the prints. (Print Rating: 2) |
| 14 | 80:8.7:1:0.2:01 mixture of Water: EG: Joncryl 678: DLP-10: Solsperse 20000 | 36 | 1.4 | There was drying of the nozzle plate, which resulted in some jets not firing very well at the start of the print. These jets start firing again as the print progresses. The ink displayed excellent performance in terms of the sharpness of the image, the reflectivity of the image and the longevity of the ink. The prints were rub resistant and water proof after drying. (Print Rating: 5) |
| 15 | 80:7.7:2:0.2: 01 mixture of Water: EG: Joncryl 678: DLP-10: Solsperse 20000 | 37 | 1.65 | The ink had problems jetting and the image quality was not very good with blurring of the edges and also a lot of satellites were visible. The prints were rub resistant and water proof after drying. The nozzles clog, which was evident by streaks in the prints. (Print Rating: 3) |
| 16 | 80:8.7:1:0.2:01 mixture of Water: EG: Joncryl 62: DLP-10: Solsperse 20000 | 38 | 1.7 | The ink had problems jetting and the image quality was not very good with blurring of the edges and also a lot of satellites were visible. The prints were rub resistant and water proof after drying. The nozzles clog, which was evident by streaks in the prints. (Print Rating: 2) |
| 17 | 80:7.7:2:0.2: 01 mixture of Water: EG: Joncryl 62: DLP-10: Solsperse 20000 | 39 | 1.7 | The ink had problems jetting and the image quality was not very good with blurring of the edges and also a lot of satellites were visible. The prints were rub resistant and water proof after drying. The nozzles clog, which was evident by streaks in the prints. Stops printing after a few prints. (Print Rating: 1) |
| 18 | 80:8.7:1:0.2:01 mixture of Water: EG: Joncryl ECO 675: DLP-10: Solsperse 20000 | 36 | 1.4 | The ink displayed excellent performance in terms of the sharpness of the image, the reflectivity of the image and the longevity of the ink. The prints were rub resistant and water proof after drying. (Print Rating: 5) |
| 19 | 80:8.7:1:0.2:01 mixture of Water: EG: Joncryl 624: DLP-10: Solsperse 20000 | 37 | 1.4 | The ink did not print very well from the start with most jets not firing. The cartridge stops printing after a few prints. (Print Rating: 1) |
| 20 | 80:8.7:1:0.2:01 mixture of Water: EG: Joncryl 1536: DLP-10: Solsperse 20000 | 37 | 1.65 | The ink had problems jetting and the image quality was not very good with blurring of the edges and also a lot of satellites were visible. The prints were rub resistant and water proof after drying. The nozzles clog, which was evident by streaks in the prints. (Print Rating: 2) |
| 21 | 80:8.7:1:0.2:01 mixture of Water: EG: Joncryl 2664: DLP-10: Solsperse 20000 | 36 | 1.65 | The ink had problems jetting and the image quality was not very good with blurring of the edges and also a lot of satellites were visible. The prints were rub resistant and water proof after drying. The nozzles clog, which was evident by streaks in the prints. (Print Rating: 2) |
| 22 | 80:8.7:1:0.2:01 mixture of Water: PG: Joncryl 678: DLP-10: Solsperse 20000 | 38 | 1.7 | The ink had problems jetting and the image quality was not very good with blurring of the edges and also a lot of satellites were visible. The prints were rub resistant and water proof after drying. The nozzles clog, which was evident by streaks in the prints. (Print Rating: 2) |
| 23 | 70:20:0.2:0.1 mixture of Water: 20% PG: DLP-10: Solsperse 20000 | 34.5 | 2.3 | Some of the jets were out and do not come back on. The print quality was good and the printed features were reflective. (Print Rating: 2; Durability: 1 (5=Good, 1=Poor)) |
| 24 | 70:10:10:0.2:0.1 mixture of Water: 10% PG: 10% Glycerol: DLP-10: Solsperse 20000 | 33.6 | 2.2 | Some of the jets were out and did not come back on. Printing got worse after each print and the print quality went from bad to worse. (Print Rating: 1; Durability: 3) |
| 25 | 80:5:5:0.2:0.1 mixture of Water: 5% PG: 5% Glycerol: DLP-10: Solsperse 20000 | 34.2 | 1.5 | At the start, the first few prints had some jets drop out, but by print four, the prints seemed to get better and more stable until the end. (Print Rating: 3; Durability: 3) |
| 26 | 80:1:ex:10:0.2:0.1 mixture of Water: 1% Joncryl 675 (pH 8.3): excess NH₄OH: 10% PG: DLP-10: Solsperse 20000 | 35.5 | 1.7 | The jets started to drop out by print two. A few more dropped out by print five. Most of the jets dropped out on print thirteen and then the printing stopped. (Print Rating: 1; Durability: 5) |
| 27 | 80:1:ex:10:0.2:0.1 mixture of Water: 1% Joncryl 675 (pH 8.6): excess NH₄OH: 10% PG: DLP-10: Solsperse 20000 | 35.2 | 1.8 | The jets started to drop out by print three. More jets dropped out by print nine. There were also streaks throughout the prints. (Print Rating: 1; Durability: 5) |
| 28 | 80:10:0.2:0.1 mixture of Water: 10% Glycerol: DLP-10: Solsperse 20000 | 33.8 | 1.5 | The jets started to drop out by print three. More jets dropped out by print eight. A few of the jets came back on by print eleven. But then, drop out again on print thirteen. A few of the jets came back on by print nineteen. (Print Rating: 2; Durability: 3.5) |
| 29 | 80:5:10:0.2:0.1 mixture of Water: 5% PEG-200: 10% PG: DLP-10: Solsperse 20000 | 34.1 | 1.9 | All of the regular prints looked great and none of the jets dropped out. On the glossy prints, the first few prints had some streaks, but the second and third prints got much better. (Print Rating: 4) |
| 30 | 80:10:0.2:0.1 mixture of Water: 10% PEG-200: DLP-10: Solsperse 20000 | 34.5 | 1.47 | On print two, some jets dropped out but came back on. The following prints looked good. The first glossy print had very small streaks, but the second and third looked great. (Print Rating: 4; Durability: 4.5) |
| 31 | 80:1:10:0.2:0.1 mixture of Water: 1% Joncryl 675+ excess dimethylethanol amine: 10% PG: DLP-10: Solsperse 20000 | 36.4 | 1.8 | The Dimethylethanolamine seemed to help the prints. There was less streaking. (Print Rating: 4; Durability: 5) |
| 32 | 80:1:10:1:0.2:0.1 mixture of Water: 1% Joncryl ECO 675: EG: 1% Ammonium Nitrate: DLP-10: Solsperse 20000 | 36.3 | 1.6 | The prints did not improve, possibly because of the excess ammonium nitrate. (Print Rating: 3; Durability: 5) |
| 33 | 80:2:10:0.2:0.1 mixture of Water: 2% Joncryl 675 dissolved in dimethylethanol amine: PG: DLP-10: Solsperse 20000 | 36.3 | 1.9 | First two prints leaked, there were many jets out and a lot of streaks on the glossy prints. (Print Rating: 2; Durability: 5) |
| 34 | 80:2:10:1:0.2:0.1 mixture of Water: 2% Joncryl 675: 10% PG: 1% ammonium nitrate: DLP-10: Solsperse 20000 | 35.9 | 1.8 | Some of the jets at the top of the page dropped out and then stopped completely. The glossy prints were streaky. (Print Rating: 3; Durability: 5) |
| 35 | 80:1:10:0.2:0.1 mixture of Water: 1% Joncryl 690: EG: DLP-10: Solsperse 20000 | 36.4 | 1.8 | The printing started out ok, but then some of the jets at the top of the page dropped out and then stopped completely by the middle of the printing. Glossy prints were streaky. (Print Rating: 3) |
| 36 | 80:1:10:0.2:0.1 mixture of Water: 1% Joncryl 675 dissolved in dimethylethanol amine: PG: DLP-10: Solsperse 20000 | 35.5 | 1.7 | Some of the jets at the top of the page were dropping out and then stopped completely. Glossy prints were streaky. (Print Rating: 3; Durability: 5) |
| 37 | 80:1:10:0.2:0.1 mixture of Water: 1% Joncryl 682: EG: DLP-10: Solsperse 20000 | 36.3 | 1.6 | Printing started out ok, but by the sixth print the jets started dropping out. Glossy prints were streaky. (Print Rating: 3; Durability: 5) |
| 38 | 80:1:10:0.1:0.2:0.1 mixture of Water: 1% Joncryl 675: PG: ammonium nitrate: DLP-10: Solsperse 20000 | 35.4 | 1.6 | Print one has a lot of streaks, which get worse with each print. The printing stops after print two. (Print Rating: 1; Durability: 5) |
| 39 | 80:1:10:0.2:0.1 mixture of Water: 1% Joncryl 682 + dimethylethanol amine: EG: DLP-10: Solsperse 20000 | 36.5 | 1.8 | Top jets out on about 7 of the first 10 prints. After that it printed well. (Print Rating: 3; Durability: 5) |
| 40 | 80:1:10:0.2:0.1 mixture of Water: 1% Joncryl 682 dissolved in dimethylethanol amine: PG: DLP-10: Solsperse 20000 | 36.6 | 1.7 | First two prints were bad, cartridge was shaken. After that, prints were good except for a few jets out on all prints. (Print Rating: 3; Durability: 5) |
| 41 | 80:1:10:0.2:0.1 mixture of Water: 1% Joncryl 682 dissolved in dimethylethanol amine (pH 8.5): PG: DLP-10: Solsperse 20000 | 36.6 | 1.7 | Printing started out ok, but by the second print the jets started dropping out. Glossy prints looked good and there wasn't much streaking. (Print Rating: 4; Durability: 5) |
| 42 | 80:1:10:0.2:0.1 mixture of Water: 1% Joncryl 682 dissolved in dimethylethanol amine: 10% Glycerol: DLP-10: Solsperse 20000 | 36.9 | 1.6 | Some of the jets are dropping out at the top of the page. By the third print, some jets above the solid section drop out. The glossy prints looked great. (Print Rating: 3; Durability: 5) |
| 43 | 80:1:10:0.2:0.1 mixture of Water: 1 % Joncryl 682 dissolved in dimethylethanol amine: 10% PEG-200: DLP-10: Solsperse 20000 | 36.3 | 1.7 | The first print had a lot of jets drop out and the printing stopped by the fourth print. The cartridge was shaken and the printing was great. Glossy prints looked great too. (Print Rating: 5; Durability: 5) |
| 44 | 80:1:10:0.2:0.1 mixture of Water: 1% Joncryl 682 dissolved in dimethylethanol amine (pH 9.9): PG: DLP-10: Solsperse 20000 | 36.6 | 1.8 | Printed well, but some of the jets drop out throughout the prints toward the top and right sections of the page. There was a slightly pinkish tint on the glossy prints. (Print Rating: 4; Durability: 5) |
| 45 | 80:1:10:0.2:0.1 mixture of Water: 1% Joncryl 682 dissolved in dimethylethanol amine (pH 10.1): PG: DLP-10: Solsperse 20000 | 36.5 | 1.8 | Printed well, but some of the jets drop throughout the top right section of the prints. There is a slight pinkish tint on the glossy prints. (Print Rating: 4; Durability: 5) |
| 46 | 80:1:10:0.2:0.1 mixture of Water: 1% Joncryl 682 dissolved in dimethylethanol amine (pH 10.3): PG: DLP-10: Solsperse 20000 | 36.4 | 1.8 | After the fourth print, the cartridge was taken out and shaken. The next day, there appeared to be a pink haze on the glossy prints. (Print Rating: 3; Durability: 5) |
| 47 | 80:1:10:0.2:0.1 mixture of Water: 1% Joncryl 682 dissolved in dimethylethanol amine (pH 10.3): PG: DLP-10: Solsperse 20000 | 36.5 | 1.8 | Printed well. The next day there appeared to be a pink haze on the glossy prints. (Print Rating: 3; Durability: 5) |
| 48 | 80:1:5:10:0.2:0.1 mixture of Water: 1% Joncryl 682 dissolved in dimethylethanol amine: 5% Ag: 10% PEG 200: DLP-10: Solsperse 20000 | 36.4 | 1.7 | Printed really well. (Print Rating: 5; Durability: 5) |
| 49 | 80:1:7.5:10:0.2:0.1 mixture of Water: 1% Joncryl 682 dissolved in dimethylethanol amine: 7.5% Ag: 10% PEG 200: DLP-10: Solsperse 20000 | 36.4 | 1.8 | Printed really well. (Print Rating: 5; Durability: 5) |
| 50 | 80:1:10:0.1:0.2:0.1 mixture of Water: 1% Joncryl 682 dissolved in dimethylethanol amine: PG: 0.1% Surfynol DF -75: DLP-10: Solsperse 20000 | 36.7 | 1.9 | Ink leaked all over the first two prints. There were satellites on the first print. There was also quite a bit of jet drop off. (Print Rating: 2; Durability: 5) |
| 51 | 80:1:10:0.2:0.2:0.1 mixture of Water: 1% Joncryl 682 dissolved in dimethylethanol amine: PG: 0.2% Surfynol DF -75: DLP-10: Solsperse 20000 | 36.7 | 1.8 | There was quite a bit of jet drop out. (Print Rating: 2; Durability: 5) |
| 52 | 80:1:10:0.5:0.2:0.1 mixture of Water: 1% Joncryl 682 dissolved in dimethylethanol amine: PG: 0.5% Surfynol DF -75: DLP-10: Solsperse 20000 | 36.5 | 1.8 | Some jets out at top and bottom throughout all printing. (Print Rating: 3; Durability: 5) |
| 53 | 75:1:15:0.2:0.1 mixture of Water: 1% Joncryl 682 dissolved in dimethylethanol amine: 15% PEG-200: DLP-10: Solsperse 20000 | 35.7 | 2.2 | Printed very well (Print Rating: 5; Durability: 5) |
| 54 | 70:1:20:0.2:0.1 mixture of Water: 1% Joncryl 682 dissolved in dimethylethanol amine: 20% PEG-200: DLP-10: Solsperse 20000 | 35.3 | 2.8 | First print was bad, cartridge was shaken. After that, it printed very well. No jets were out but the glossy prints solid section had some bubbly streaks. (Print Rating: 4; Durability: 5) |
| 55 | 50:25:25 mixture of 50% EG, 25% Glycerol, 25% ETOH | 33.3 | 15.7 | Printed well. (Print Rating: 4; Durability: 5) |

While the present invention has been described with reference to exemplary embodiments, it is understood that the words that have been used are words of description and illustration, rather than words of limitation. Changes may be made, within the purview of the appended claims.

## Claims

1. An ink, comprising:
(a) metallic nanoparticles in an amount from 2 to 40 weight percent, optionally from about 5 to about 20 weight percent, based on the total weight of the ink; and a vehicle comprising:
(b) water in an amount greater than about 60 weight percent, optionally greater than about 80 weight percent, based on the total weight of the ink, and
(c) ethylene glycol or propylene glycol.

2. The ink of claim 1, wherein the ink is suitable for thermal ink jet printing or piezo electric ink jet printing.

3. The ink of claim 1, wherein the ink comprises less than about 20 weight percent volatile organic compounds.

4. The ink of claim 1, wherein the metallic nanoparticles have an average particle size of less than about 500 nm.

5. The ink of claim 1, wherein the metallic nanoparticles have an anti-agglomeration agent disposed thereon.

6. The ink of claim 5, wherein the anti-agglomeration agent comprises PVP.

7. The ink of claim 1, wherein the ink has a viscosity of less than about 10 cP, optionally less than 7.5 cP or less than 5 cP.

8. An ink cartridge comprising an ink reservoir, a printing head in communication with the ink reservoir, and the ink of claim 1 disposed in the ink reservoir.

9. A process for forming a reflective feature, the process comprising the steps of:
(a) providing an ink according to claim 1; and
(b) direct write printing the ink to form the reflective feature.

10. The process of claim 9, wherein the ink is an ink according to claims 2-6.

11. The process of claim 9, wherein step (b) comprises ink jet printing the ink from an ink reservoir, through a print head, and onto a substrate, wherein the temperature of the ink reservoir or print head is greater than about 30°C.

12. The process of claim 9, wherein the process further comprises the step of:
(c) applying ultraviolet or infrared radiation to the printed ink.

13. The process of claim 9, wherein the reflective feature is printed on a substrate comprising a sheet of transparent material and a reflective layer, the transparent material having a transparent surface, and the reflective feature being printed on the transparent surface.

14. The process of claim 9, wherein the reflective feature exhibits an optical interference pattern.

## Patentansprüche

1. Tinte, umfassend:
(a) metallische Nanopartikel in einer Menge von 2 bis 40 Gewichtsprozent, optional von etwa 5 bis etwa 20 Gewichtsprozent, basierend auf dem Gesamtgewicht der Tinte; und eine Trägersubstanz, umfassend:
(b) Wasser in einer Menge von mehr als ungefähr 60 Gewichtsprozent, optional mehr als etwa 80 Gewichtsprozent, basierend auf dem Gesamtgewicht der Tinte, und
(c) Ethylenglykol oder Propylenglykol.

2. Tinte nach Anspruch 1, wobei die Tinte für Thermotintenstrahldruck oder piezoelektrischen Tintenstrahldruck geeignet ist.

3. Tinte nach Anspruch 1, wobei die Tinte weniger als etwa 20 Gewichtsprozent flüchtige organische Verbindungen aufweist.

4. Tinte nach Anspruch 1, wobei die metallischen Nanopartikel eine durchschnittliche, Partikelgröße von weniger als etwa 500 nm haben.

5. Tinte nach Anspruch 1, wobei auf den metallischen Nanopartikeln ein Antibackmittel angeordnet ist.

6. Tinte nach Anspruch 5, wobei das Antibackmittel PVP umfasst.

7. Tinte nach Anspruch 1, wobei die Tinte eine Viskosität von weniger als etwa 10 cP hat, optional weniger als 7,5 cP oder weniger als 5 cP.

8. Tintenkartusche, die einen Tintenspeicher, einen Druckkopf, in Verbindung mit dem Tintenspeicher, und die Tinte nach Anspruch 1, angeordnet im Tintenspeicher, umfasst.

9. Verfahren zum Bilden eines reflektierenden Elements, wobei das Verfahren die Schritte umfasst:
(a) Bereitstellen einer Tinte nach Anspruch 1; und
(b) direkter Schreibdruck der Tinte, um das reflektierende Element zu bilden.

10. Verfahren nach Anspruch 9, wobei die Tinte eine Tinte nach den Ansprüchen 2-6 ist.

11. Verfahren nach Anspruch 9, wobei der Schritt (b) ein Tintenstrahldrucken der Tinte aus einem Tintenspeicher, durch einen Druckkopf, und auf eine Trägerschicht umfasst, wobei die Temperatur des Tintenspeichers oder Druckkopfes höher als etwa 30 °C ist.

12. Verfahren nach Anspruch 9, wobei das Verfahren des Weiteren den Schritt umfasst:
(c) Anwenden ultravioletter oder infraroter Strahlung an der gedruckten Tinte.

13. Verfahren nach Anspruch 9, wobei das reflektierende Element auf eine Trägerschicht gedruckt ist, umfassend ein Blatt transparentes Material und eine reflektierende Schicht, wobei das transparente Material eine transparente Oberfläche hat und das reflektierende Element auf die transparente Oberfläche gedruckt ist.

14. Verfahren nach Anspruch 9, wobei das reflektierende Element ein optisches Interferenzmuster aufweist.

## Revendications

1. Encre, comprenant :
(a) des nanoparticules métalliques dans une quantité de 2 % à 40 % en poids, optionnellement d'environ 5 % à environ 20 % en poids, relativement au poids total de l'encre ; et un véhicule comprenant :
(b) de l'eau dans une quantité supérieure à environ 60 % en poids, optionnellement supérieure à environ 80 % en poids, relativement au poids total de l'encre, et
(c) de l'éthylène glycol ou du propylène glycol.

2. Encre selon la revendication 1, l'encre convenant pour une impression au jet d'encre par procédé thermique ou pour une impression au jet d'encre par procédé piézo-électrique.

3. Encre selon la revendication 1, l'encre comprenant moins d'environ 20 % en poids de composés organiques volatils.

4. Encre selon la revendication 1, dans laquelle les nanoparticules métalliques ont une taille de particule moyenne inférieure à environ 500 nm.

5. Encre selon la revendication 1, dans laquelle les nanoparticules métalliques comportent un agent antiagglomérant disposé sur lesdites nanoparticules métalliques.

6. Encre selon la revendication 5, dans laquelle l'agent antiagglomérant comprend de la PVP.

7. Encre selon la revendication 1, l'encre ayant une viscosité inférieure à environ 10 cP, optionnellement inférieure à 7,5 cP ou inférieure à 5 cP.

8. Cartouche d'encre comprenant un réservoir d'encre, une tête d'impression en communication avec le réservoir d'encre, et l'encre selon la revendication 1 se trouvant dans le réservoir d'encre.

9. Procédé de formation d'un élément réfléchissant, le procédé comprenant les étapes qui consistent à :
(a) fournir une encre selon la revendication 1 ; et
(b) effectuer une impression à écriture directe avec l'encre pour former l'élément réfléchissant.

10. Procédé selon la revendication 9, dans lequel l'encre est une encre selon les revendications 2 à 6.

11. Procédé selon la revendication 9, dans lequel l'étape (b) comprend une impression au jet d'encre avec l'encre provenant d'un réservoir d'encre, par l'intermédiaire d'une tête d'impression, et sur un substrat, la température du réservoir d'encre ou de la tête d'impression étant supérieure à environ 30 °C.

12. Procédé selon la revendication 9, le procédé comprenant en outre l'étape qui consiste à :
(c) appliquer un rayonnement ultraviolet ou infrarouge à l'encre imprimée.

13. Procédé selon la revendication 9, dans lequel l'élément réfléchissant est imprimé sur un substrat comprenant une feuille de matériau transparent et une couche réfléchissante, le matériau transparent comportant une surface transparente, et l'élément réfléchissant étant imprimé sur la surface transparente.

14. Procédé selon la revendication 9, dans lequel l'élément réfléchissant présente un motif d'interférence optique.
